(19) Europäisches Patentamt
European Patent Office
Office européen des brevets

(11) **EP 4 513 338 A1**

(12) **EUROPEAN PATENT APPLICATION**

(43) Date of publication:
**26.02.2025 Bulletin 2025/09**

(51) International Patent Classification (IPC):
***G06F 11/14*** (2006.01)

(21) Application number: **24179963.4**

(22) Date of filing: **04.06.2024**

(52) Cooperative Patent Classification (CPC):
**G06F 11/1461**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.08.2023 IN 202341056996**
**31.10.2023 US 202318499115**

(71) Applicant: **Cohesity, Inc.**
**San Jose, CA 95110 (US)**

(72) Inventors:
• **SHARMA, Rajat**
**San Jose, 95110 (US)**
• **JAIN, Kshitiz**
**San Jose, 95110 (US)**
• **ARULRAJ, Leo Prasath**
**San Jose, 95110 (US)**

(74) Representative: **EIP**
**Fairfax House**
**15 Fulwood Place**
**London WC1V 6HU (GB)**

(54) **SMART JOB SCHEDULING OF PIPELINES WITH BACKLOG INDICATOR**

(57) Techniques are described for configuring a data platform to schedule workloads using backlog indicators. For instance, processing means of a data platform may obtain a generic backlog indicator for workloads to execute via the data platform. Each of the workloads may specify one or more storage system maintenance operations. Processing means may obtain a custom backlog indicator for at least a subset of the workloads. Processing means may calculate a single weighted backlog indicator value for each of the workloads by applying configurable weights to the generic backlog indicators and the custom backlog indicators. The data platform may schedule the workloads for execution on the data platform based on the single weighted backlog indicator value calculated for each workload. In some examples, the data platform processes the workloads according to the scheduling.

400

OBTAIN A GENERIC BACKLOG INDICATOR FOR EACH WORKLOAD TO EXECUTE. — 405

↓

OBTAIN A CUSTOM BACKLOG INDICATOR FOR AT LEAST A PORTION OF THE WORKLOADS. — 410

↓

CALCULATE A SINGLE WEIGHTED BACKLOG INDICATOR VALUE FOR EACH WORKLOAD TO EXECUTE. — 415

↓

SCHEDULE THE WORKLOADS USING THE SINGLE WEIGHTED BACKLOG INDICATOR VALUE FOR EACH WORKLOAD TO EXECUTE. — 420

↓

PROCESS THE WORKLOADS ACCORDING TO THE SCHEDULE. — 425

**FIG. 4**

EP 4 513 338 A1

**Description**

## TECHNICAL FIELD

This disclosure relates to data platforms for computing systems.

## BACKGROUND

Data platforms that support computing applications require the execution of various tasks, including periodically repeating end user tasks, background tasks, and overhead tasks, all of which support the end user's direct or indirect objectives as well as the overall efficiency of the data platform. Many of these tasks are scheduled based on an associated fixed run frequency for the given task. Because limited computational resources are allocated to running such tasks, end users and platform administrators may encounter situations where a critical job is not scheduled in time due to an overall lack of available system resources, which cause increased work backlogs for the data platform, and ultimately result in follow on effects including decreased operational performance, missing service level agreements (SLAs), and potentially running out of space on clusters which rely upon primary storage systems to support latency sensitive applications.

## SUMMARY

Aspects of this disclosure describe techniques for performing smart job scheduling of pipelines based on the use of both custom and generic backlog indicators associated with enqueued pipelines. Pipelines, also referred to as workloads, may be associated with a generic backlog indicator which may represent a measure of time that a given workload remains in an unscheduled state after the workload concludes a prior execution. Certain pipelines or workloads may additionally be associated with a custom backlog indicator which may be configurable to the particular implementation needs, including, for example, representing a measure of utilization for a specified one or more resources within the data platform affected by the data platform executing the respective workload.

Rather than scheduling workloads based primarily an associated fixed run frequency for any given task, which can lead to excess utilization rates and excessive execution delays, the techniques described in this disclosure may enable scheduling of workloads and pipelines to be optimized through the use of generic backlog indicators and workload specific custom backlog indicators.

Use of the generic backlog indicator associated with enqueued pipelines and the custom backlog indicator, when available and having been associated with a portion or subset of the enqueued pipelines, improves operational efficiency of the data platform or custom configured computing system by minimizing late executing jobs, excessive computational burden on certain computing clusters, and may lead to greater responsiveness of the data platform. For example, the smart scheduling may eliminate situations where end users have a critical job fail to execute by a specified deadline due to a lack of computational resources, which then in turn, results in an increased work backlog with the side effects of lower performance, missing SLAs, running out of data storage space on cluster. Further still, it is not systematically feasible to manually attend to each end user concern attributable to perceived degradation in operational performance of the data platform. An automated and improved technique for the smart scheduling of workloads, for example, the smart scheduling of garbage collection or maintenance operation related workloads, algorithms, and routines, is therefore provided.

Not all workloads, pipelines, and algorithms are dedicated to garbage removal operations. While the specific operations depend on the particular pipeline implementation, alternatives to garbage collection operations include workloads for performing the collection of system wide statistics, operational statistics for on a per-cluster, per-end user, per-workload, or per-data center basis, workloads for fixing the replication factor of data, erasure coding (EC) operations, deduplication operations, cloud archival operations, stale sessions identification and removal operations, and so forth.

For instance, workloads may specify one or more storage systems maintenance operations for storage systems under the control of the data platform. Examples of such storage system maintenance operations include garbage removal operations, data replication redundancy operations, storage node recovery operations, and server message block (SMB) session removal operation. For example, garbage removal operations may, responsive to determining the data platform has identified data as available for removal from the one or more storage systems managed by the data platform, remove the data from the one or more storage systems. In one example, a workload/pipeline implementing a garbage collection and/or data removal process identifies what data is available for removal by initially identifying metadata which is referring to deleted data and subsequently, if the deleted data is unreferenced by any of the metadata, the deleted data is removed by the garbage collection and/or data removal process.

Data replication redundancy operations may, responsive to determining a count of operational replicas of a data instance that falls below a configured redundancy minimum, replicate the data instance to create a new operational replica of the data instance. In some examples, storage node recovery operations may clone, copy, and/or replicate the data instance into a new storage node in response to determining a storage node failure lowers the count of operational data instances below the configured redundancy minimum. Another example of storage system maintenance operations includes server message block (SMB) session removal operations that, responsive to determining the data platform has identified one or more SMB sessions as available for removal from the one or more storage systems managed by the data platform, remove the one or more SMB sessions from the one or more storage systems.

In one instance, various aspects of the techniques are directed to a method. The example method may include obtaining, by processing means of a data platform, a generic backlog indicator for a plurality of workloads to execute via the data platform. In such an instance, each of the plurality of workloads may specify one or more storage system maintenance operations for one or more storage systems managed by the data platform. In some examples, processing means of the data platform obtains a custom backlog indicator for at least a subset of the plurality of workloads to execute via the data platform. Processing means may calculate a single weighted backlog indicator value for each of the plurality of workloads to execute via the data platform. For example, the single weighted backlog indicator value may be calculated by applying configurable weights to each of the generic backlog indicator and the custom backlog indicator for a respective workload from the plurality of workloads. In some examples, the processing means schedules the plurality of workloads for execution on the data platform based on the single weighted backlog indicator value calculated for each of the plurality of workloads. In such an example, the data platform may process the plurality of workloads according to the schedule.

In another instance, various aspects of the techniques are directed to a data platform having a storage system and processing means having access to the storage system, and . In such an example, the processing means is configured to perform various operations. In such an example, the processing means may obtain a custom backlog indicator for at least a subset of the plurality of workloads to execute via the data platform. Processing means may calculate a single weighted backlog indicator value for each of the plurality of workloads to execute via the data platform, by applying configurable weights to each of the generic backlog indicator and the custom backlog indicator for a respective workload from the plurality of workloads. In some examples, processing means schedules the plurality of workloads for execution on the data platform based on the single weighted backlog indicator value calculated for each of the plurality of workloads. In such an example, the data platform may process the plurality of workloads according to the schedule.

In another instance, various aspects of the techniques are directed to computer-readable storage media having instructions that, when executed, configure one or more processors to perform various operations. In such an example, the instructions, when executed, may configure one or more processors to obtain a generic backlog indicator for a plurality of workloads to execute via the data platform. In such an instance, each of the plurality of workloads may specify one or more storage system maintenance operations for one or more storage systems managed by the data platform. In some examples, the instructions configure one or more processors to obtain a custom backlog indicator for at least a subset of the plurality of workloads to execute via the data platform. The instructions may configure one or more processors to calculate a single weighted backlog indicator value for each of the plurality of workloads to execute via the data platform. For example, the single weighted backlog indicator value may be calculated by applying configurable weights to each of the generic backlog indicator and the custom backlog indicator for a respective workload from the plurality of workloads. In some examples, the instructions may configure the one or more processors schedule the plurality of workloads for execution on the data platform based on the single weighted backlog indicator value calculated for each of the plurality of workloads. In such an example, the data platform may process the plurality of workloads according to the schedule.

## BRIEF DESCRIPTION OF THE DRAWINGS

FIGS. 1A and 1B are block diagrams illustrating example systems that perform smart job scheduling of pipelines, in accordance with one or more aspects of the present disclosure.

FIG. 2 is a graph diagram illustrating the relationship between multiplier values and run interval seconds, in accordance with one or more aspects of the present disclosure.

FIG. 3 is a block diagram illustrating an example system, in accordance with techniques of this disclosure.

FIG. 4 is a flow chart illustrating an example mode of operation for a data platform 150 to perform smart job scheduling of workloads based on the use of both custom and generic backlog indicators associated with enqueued workloads, in accordance with techniques of this disclosure.

Like reference characters denote like elements throughout the text and figures.

## DETAILED DESCRIPTION

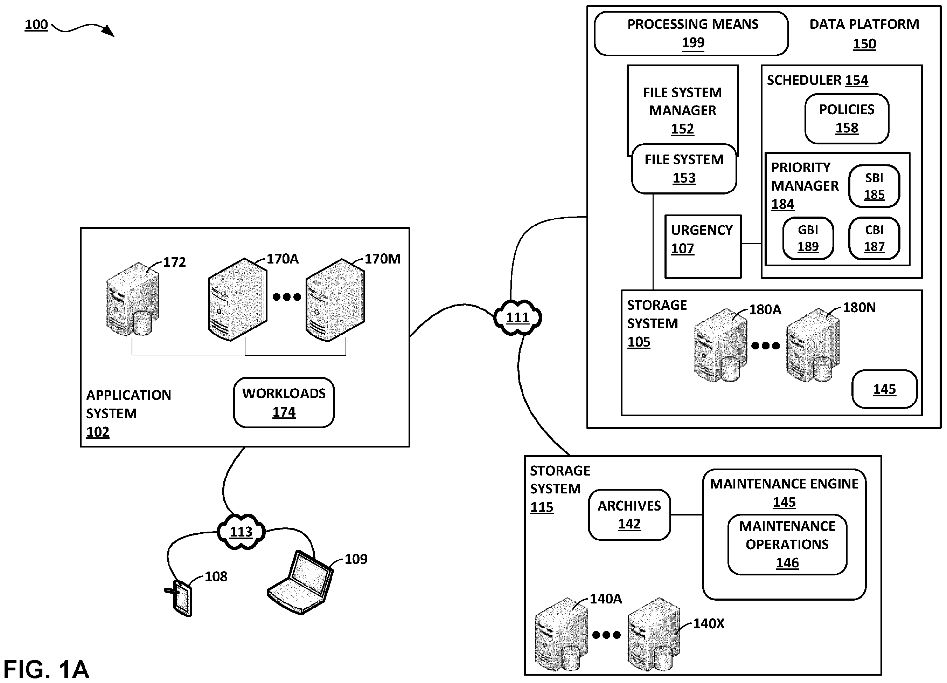

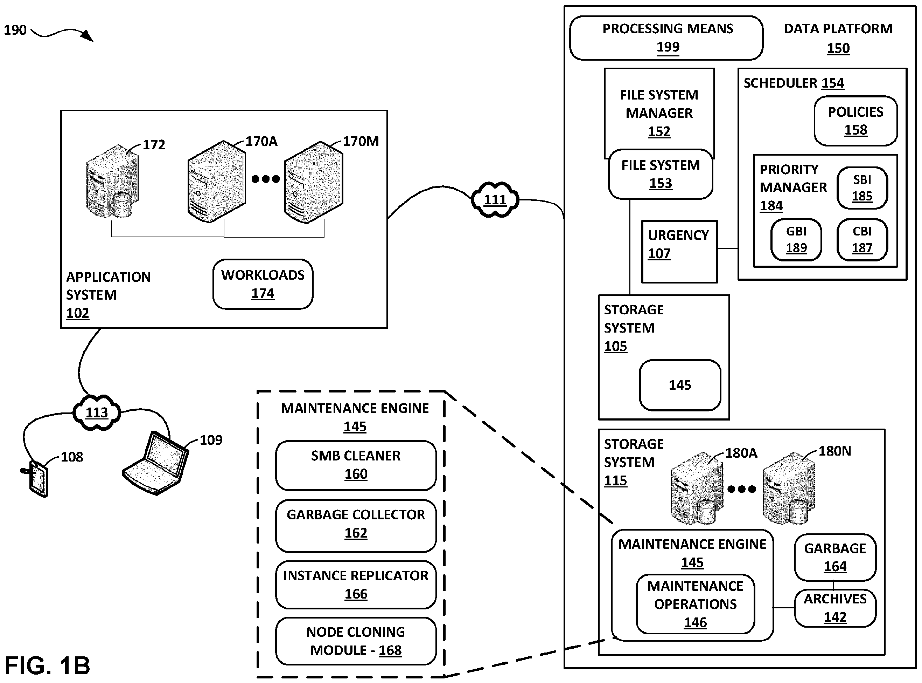

FIGS. 1A and 1B are block diagrams illustrating example systems that perform smart job scheduling of pipelines, in accordance with one or more aspects of the present disclosure. In the example of FIG. 1A, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 174 for the applications or services. Workloads 174 may include one or more virtual machines, containers, Kubernetes pods each including one or more containers, bare metal processes, and/or other types of workloads.

In the example of FIG. 1A, application system 102 includes application servers 170A-170M (collectively, "application servers 170") connected via a network with database server 172 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.)

Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, healthcare software, or other types of applications or services. The applications or services may be provided as a service (-aaS) for Software-aaS (SaaS), Platform-aaS (PaaS), Infrastructure-aaS (IaaS), Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, healthcare software, or other types of applications. Enterprise applications may be delivered as a service from external cloud service providers or other providers, executed natively on application system 102, or both.

In the example of FIG. 1A, system 100 includes a data platform 150 that provides a file system 153 and archival functions to an application system 102, using storage system 105 and separate storage system 115. Data platform 150 implements a distributed file system 153 and a storage architecture to facilitate access by application system 102 to file system data and to facilitate the transfer of data between storage system 105 and application system 102 via network 111. With the distributed file system, data platform 150 enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON Simple Storage Service (S3). File system 153 may be a primary file system or secondary file system for application system 102.

File system manager 152 represents a collection of hardware devices and software components that implements file system 153 for data platform 150. Examples of file system functions provided by the file system manager 152 include storage space management including deduplication, file naming, directory management, metadata management, partitioning, and access control. File system manager 152 executes a communication protocol to facilitate access via network 111 by application system 102 to files and objects stored to storage system 105.

In the example of FIG. 1B, system 190 includes a data platform 150 that provides a file system 153 and archival functions to an application system 102, using storage system 105 and separate storage system 115. Data platform 150 implements a distributed file system 153 and a storage architecture to facilitate access by application system 102 to file system data and to facilitate the transfer of data between storage system 105 and application system 102 via network 111. As depicted here, system storage 115 is represented as being collocated with data platform 150.

Data platform 150 includes storage system 105 having one or more storage devices 180A-180N (collectively, "storage devices 180"). Storage devices 180 may represent one or more physical or virtual computer and/or storage devices that include or otherwise have access to storage media. Such storage media may include one or more of Flash drives, solid state drives (SSDs), hard disk drives (HDDs), forms of electrically programmable memories (EPROM) or electrically erasable and programmable (EEPROM) memories, and/or other types of storage media used to support data platform 150. Different storage devices of storage devices 180 may have a different mix of types of storage media.

Each of storage devices 180 may include system memory. Each of storage devices 180 may be a storage server, a network-attached storage (NAS) device, or may represent disk storage for a computer device. Storage system 105 may be a redundant array of independent disks (RAID) system. In some examples, one or more of storage devices 180 are both compute and storage devices that execute software for data platform 150, such as file system manager 152 and scheduler 154 in the example of system 100, and store objects and metadata for data platform 150 to storage media. In some examples, separate computer devices (not shown) may execute software for data platform 150, such as file system manager 152 and scheduler 154 in the example of system 100. Each of storage devices 180 may be considered and referred to as a "storage node" or simply as a "node". Storage devices 180 may represent virtual machines running on a supported hypervisor, a cloud virtual machine, a physical rack server, or a compute model installed in a converged platform.

In various examples, data platform 150 may run on physical systems, virtually, or natively in the cloud. For instance, data platform 150 may be deployed as a physical cluster, a virtual cluster, or a cloud-based cluster running in a private, hybrid private/public, or public cloud deployed by a cloud service provider. In some examples of system 100, multiple instances of data platform 150 may be deployed, and file system 153 may be replicated among the various instances. In some cases, data platform 150 may be a compute cluster that represents a single management domain. The number of storage devices 180 may be scaled to meet performance needs.

Data platform 150 may implement and offer multiple storage domains to one or more tenants or to segregate workloads 174 that require different data policies. A storage domain may be a data policy domain that determines policies for deduplication, compression, encryption, tiering, and other operations performed with respect to objects stored using the storage domain. In this way, data platform 150 may offer users the flexibility to choose global data policies or workload specific data policies. Data platform 150 may support partitioning.

A view is a protocol export that resides within a storage domain. A view inherits data policies from its storage domain, though additional data policies may be specified for the view. Views can be exported via SMB, NFS, S3, and/or another communication protocol. Policies that determine data processing and storage by data platform 150 may be assigned at the view level. A protection policy may specify a backup frequency and a retention policy, which may include a data lock period. Archives 142 or snapshots created in accordance with a protection policy inherit the data lock period and retention period specified by the protection policy.

Each of network 113 and network 111 may be the internet or may include or represent any public or private communications network or other network. For instance, network 113 may be a cellular, Wi-Fi®, ZigBee®, Bluetooth®, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 113 or network 111 may include one or more network hubs, network switches, network routers, satellite dishes, or any other network equipment.

Such network devices or components may be operatively inter-coupled, thereby providing for the exchange of information between computers, devices, or other components (e.g., between one or more client devices or systems and one or more computer/server/storage devices or systems). Each of the devices or systems illustrated in FIGS. 1A-1B may be operatively coupled to network 113 and/or network 111 using one or more network links. The links coupling such devices or systems to network 113 and/or network 111 may be Ethernet, Asynchronous Transfer Mode (ATM) or other types of network connections, and such connections may be wireless and/or wired connections. One or more of the devices or systems illustrated in FIGS. 1A and 1B or otherwise on network 113 and/or network 111 may be in a remote location relative to one or more other illustrated devices or systems.

Application system 102, using file system 153 provided by data platform 150, generates objects and other data that file system manager 152 creates, manages, and causes to be stored to storage system 105. For this reason, application system 102 may alternatively be referred to as a "source system," and file system 153 for application system 102 may alternatively be referred to as a "source file system." Application system 102 may for some purposes communicate directly with storage system 105 via network 111 to transfer objects, and for some purposes communicate with file system manager 152 via network 111 to obtain objects or metadata indirectly from storage system 105.

File system manager 152 generates and stores metadata to storage system 105. The collection of data stored to storage system 105 and used to implement file system 153 is referred to herein as file system data. File system data may include the aforementioned metadata and objects. Metadata may include file system objects, tables, trees, or other data structures; metadata generated to support deduplication; or metadata to support snapshots. Objects that are stored may include files, virtual machines, databases, applications, pods, containers, any of workloads 174, system images, directory information, or other types of objects used by application system 102. Objects of different types and objects of the same type may be deduplicated with respect to one another.

Storage system 115 includes one or more storage devices 140A-140X (collectively, "storage devices 140"). Storage devices 140 may represent one or more physical or virtual computer and/or storage devices that include or otherwise have access to storage media. Such storage media may include one or more of Flash drives, solid state drives (SSDs), hard disk drives (HDDs), optical discs, forms of electrically programmable memories (EPROM) or electrically erasable and programmable (EEPROM) memories, and/or other types of storage media. Different storage devices of storage devices 140 may have a different mix of types of storage media. Each of storage devices 140 may include system memory. Each of storage devices 140 may be a storage server, a network-attached storage (NAS) device, or may represent disk storage for a computer device. Storage system 115 may include a redundant array of independent disks (RAID) system. Storage system 115 may be capable of storing much larger amounts of data than storage system 105. Storage devices 140 may further be configured for long-term storage of information more suitable for archival purposes.

In some examples, storage system 105 and/or 115 may be a storage system deployed and managed by a cloud storage provider and referred to as a "cloud storage system." Example cloud storage providers include, e.g., AMAZON WEB SERVICES (AWS™) by AMAZON, INC., AZURE® by MICROSOFT, INC., DROPBOX™ by DROPBOX, INC., ORACLE CLOUD™ by ORACLE, INC., and GOOGLE CLOUD PLATFORM ™ (GCP) by GOOGLE, INC. In some examples, storage system 115 is co-located with storage system 105 in a data center, on-prem, or in a private, public, or hybrid private/public cloud. Storage system 115 may be considered a "backup" or "secondary" storage system for primary storage system 105. Storage system 115 may be referred to as an "external target" for archives 142. Where deployed and managed by a cloud storage provider, storage system 115 may be referred to as "cloud storage."

Storage system 115 may include one or more interfaces for managing transfer of data between storage system 105 and storage system 115 and/or between application system 102 and storage system 115. Data platform 150 that supports application system 102 relies on primary storage system 105 to support latency sensitive applications. However, because storage system 105 is often more difficult or expensive to scale, data platform 150 may use secondary storage system 115 to support secondary use cases such as backup and archive. In general, a file system backup is a copy of file system 153 to support protecting file system 153 for quick recovery, often due to some data loss in file system 153, and a file system archive ("archive") is a copy of file system 153 to support longer term retention and review. The "copy" of file system 153 may include such data as is needed to restore or view file system 153 in its state at the time of the backup or archive. Each "copy" of file system 153 may be referred to as a "replica," a "replication instance," an "operational replica," and/or a "data instance."

Archive manager 154 may archive file system data for file system 153 at any time in accordance with archive policies that specify, for example, archive periodicity and timing (daily, weekly, etc.), which file system data is to be archived, an archive retention period, storage location, access control, and so forth. An initial archive of file system data may correspond to a state of the file system data at an initial archive time (the archive creation time of the initial archive). The initial archive may include a full archive of the file system data or may include less than a full archive of the file system data, in accordance with archive policies. For example, the initial archive may include all objects of file system 153 or one or more selected objects of file system 153.

One or more subsequent incremental archives of the file system 153 may correspond to respective states of the file system 153 at respective subsequent archive creation times, i.e., after the archive creation time corresponding to the initial archive. A subsequent archive may include an incremental archive of file system 153. A subsequent archive may correspond to an incremental archive of one or more objects of file system 153. Some of the file system data for file system 153 stored on storage system 105 at the initial archive creation time may also be stored on storage system 105 at the subsequent archive creation times. A subsequent incremental archive may include data that was not previously archived to storage system 115. File system data that is included in a subsequent archive may be deduplicated by archive manager 154 against file system data that is included in one or more previous archives, including the initial archive, to reduce the amount of storage used. (Reference to a "time" in this disclosure may refer to dates and/or times. Times may be associated with dates. Multiple archives may occur at different times on the same date, for instance.)

In this example, data platform 150 includes scheduler 154 that may provide scheduling services for overhead tasks, background tasks, and end user tasks, collectively referred to as workloads 174, which interact with file system 153. In the example of system 100, scheduler 154 schedules periodically repeating workloads 174 which interact with file system data, stored by storage system 105, based on a scaled backlog indicator (SBI) 185. The scaled backlog indicator 185 may be calculated by priority manager 184 on behalf of the scheduler 154 as a composite value or score on the basis of various metrics, including a generic backlog indicator (GBI) 189, a custom backlog indicator (CBI) 187, and urgency 107 of a particular workload 174, in accordance with the policies 158 established and configured for the scheduler 154.

Continuing with this example, scheduler 154 provides scheduling services for various workloads 174. For example, the scheduler 154 may utilize a defined backlog indicator for smart scheduling of various tasks, jobs, or workloads 174, executed on behalf of a platform end user or administrators for the platform. A backlog indicator may be a value between 0 to 100 with two parts, specifically, a generic indicator or generic backlog indicator 189 to provide fairness among different pipelines based on a desired scheduling frequency for workload 174 in question along with a custom indicator or custom backlog indicator 187 which may be determined by algorithms to define a backlog for a given workload 174. The framework of scheduler 154 may allow adding more and more custom backlog indicators for different pipelines. Computational workloads 174 may be scheduled in decreasing order of their backlog indicator values which may be dynamically recalculated according to the configured policies 158 of the scheduler.

Data platform 150 may execute various repeating periodic computational workloads 174 related to maintenance and/or optimization of storage systems 105, 115 within data platform 150 and/or under the control of data platform 150. In the example of FIG. 1A, each of storage systems 105, 115 include a maintenance engine 145. Maintenance engine 145 may include one or more storage system maintenance operations 146, logic, and/or execution modules. For instance, maintenance engine 145 may carry out a variety of storage system 105, 115 optimization operations, clean-up operations, and/or SLA compliance operations. In some examples, the one or more storage system maintenance operations 146 may include garbage removal operations. For instance, garbage removal operations may remove data from the one or more storage systems responsive to a determination the data platform has identified the data as available for removal from the one or more storage systems.

In other examples, the one or more storage system maintenance operations 146 may include data replication redundancy operations. Such data replication redundancy operations may replicate a data instance to create a new operational replica of the data instance responsive to determining a count of operational replicas of a data instance is below a configured redundancy minimum. In other examples, the one or more storage system maintenance operations 146 may include data replication redundancy operations. Across the storage systems 105, 115, there may be a large number of storage nodes operating simultaneously, and when one of the storage nodes encounters a failure (e.g., a software problem or a hardware fault), the failing storage node may take a previously operational node and data instance offline. Thus, the data replication redundancy operations may clone the data instance into a new storage node responsive to determining a storage node failure within the one or more storage systems 105, 115 lowers the count of operational data instances below the configured redundancy minimum. In yet another example, the one or more storage system maintenance operations 146 may include server message block (SMB) session removal operations. Such SMB session removal operations may remove one or more SMB sessions from the one or more storage systems responsive to determining data platform 150 has identified one or more SMB sessions as available for removal.

In the example of FIG. 1B, maintenance engine 145 is depicted in greater detail. In this example, maintenance engine 145 further includes a server message block (SMB) cleaner 160, garbage collector 162, instance replicator 166, and node cloning module 168. In some examples, garbage removal operations performed by garbage collector 162 remove garbage 164 buildup on a cluster. In certain instances, data platform 150 may be unable to keep up with garbage collection workloads 174 using fixed interval scheduling, as the requested garbage collection ("GC") workload 174 may be excessively delayed or initiated but then canceled before it is able to complete its processing objectives. Garbage collector 162 may perform garbage collection, configured by processing means (e.g. processing circuitry) of data platform 150 to remove garbage 164 identified within the storage system 115 as a maintenance and/or processing optimization operation for data platform 150 itself or on a per-end user basis. Scheduler 154 may optionally be configured to make garbage collection on data platform 150 more aggressive by setting certain configurable settings, including the use of configurable flags, such as "Google Commandline Flags" or "gflags." The gflags which are defined by "gflags.github.io/gflags" are not specific to garbage collection, but may be used for prioritizing garbage collection and/or data removal processes. Setting these gflags will typically require manual intervention and they are generally configured in a reactive rather than proactive manner to resolve an end user's higher cluster utilization and growing estimated garbage 164. Reverting these gflags may be performed manually, automatically after a configurable time-out period, and/or when cluster utilization drops down to a level which satisfies a configured threshold indicating that accrued garbage is under control.

Optionally, data platform 150 may expose an "Aggressive GC UI button," to an administrator accessible UI and optionally to an end user UI which is configured to apply aggressive GC gflags with a single button click. However, this approach may not always be appropriate to expose to end users and may therefore require administrative support involvement to assess the operational performance of the end user's cluster state before applying aggressive GC settings, thus resulting in delay and additional cost. For example, consider a cluster sizing issue with not much garbage 164 to reclaim. Even if the option is exposed to an end user directly, setting aggressive GC by an end user will not resolve the underlying issue, and thus, due diligence by administrative support is still required as exposing the configuration capability to the end user may only result in, counter-intuitively, degraded data platform 150 performance due to an increased computational burden associated with the end user configured aggressive GC setting being activated.

While establishing the "Aggressive GC button" through the end user or administrative UI may improve the process some by offering a simplified single button click as well as a configuration for reverting the gflags automatically when an expiry deadline is reached, greater optimization may be attained through the use of scheduler 154 and specifically by performing smart job scheduling of pipelines.

Processes other than garbage collector 162 may utilize generic backlog indicator 189. For instance, server message block (SMB) cleaner 160 may utilize generic backlog indicator 189 for server message block (SMB) session removal operations. Instance replicator 166 may utilize generic backlog indicator 189 for data replication redundancy operations. Node cloning module 168 may utilize generic backlog indicator 189 for storage node recovery operations. Similarly, custom backlog indicator 187 may optionally be configured for use with various maintenance operations 146, although this is not required. When custom backlog indicator 187 is configured for any of garbage collection operations, SMB session removal operations, data replication redundancy operations, and/or storage node recovery operations, priority manager 184 may use both the values corresponding to each of generic backlog indicator 189 and custom backlog indicator 187 for each respective workload 174 to calculate a single weighted backlog indicator value.

Instance replicator 166 may operate as a replication monitor and fixer. For example, when a number of operational replicas for a data instance of the storage system 105, 115 is determined to be less than a configurable minimum or less than what is required by an SLA, the instance replicator 166 may automatically create a new operational instance. For example, the new operational instance may be created by copying a master data instance or by copying and/or replicating one of the remaining operational replicas. In such a way, a configurable minimum number of simultaneous copies of a data instance may be maintained and/or preserved by the maintenance engine 145. Node cloning module 168 may operate to copy, duplicate, and/or clone storage nodes within storage system 105, 115. Such storage nodes may have data replicas within them and as such, cloning a storage node results in a new data instance replica.

In other instances, cloning a storage node provisions an operational storage node into which a new data instance replica may be copied, duplicated, and/or replicated. Storage node cloning may occur automatically by node cloning module 168 upon discovery of a failed storage clone, a change in computational burden on data platform 150, and/or a changed SLA specifying an increase in a total quantity of available and operational storage nodes. Regardless, a workload 174 may periodically execute and check for the total number of operational storage nodes. When the total number of operational storage nodes satisfies a threshold, SLA, or other criteria, workload 174 may complete very quickly given that any storage node recovery operations will either not be executed or execute and complete quickly as the operational storage node conditions are already satisfied. Conversely, when storage node recovery operations must clone one or more storage nodes, the computational burden can be significant. Consequently, the storage node recovery operations may not complete in time, and thus, incur a workload 174 backlog. Priority manager 184 may therefore address the resulting backlog based on the generic backlog indicator 189 associated with workload 174 for the storage node recovery operations and the optional custom backlog indicator 187 when configured.

In a similar example, the instance replicator 166 may initiate data replication redundancy operations with some periodic frequency using a scheduled workload 174. As with the prior example, many such workloads 174 may execute to completion very quickly, as the quantity of operational data instances satisfies a minimum. Consider, however, an example, where an under-replication condition is discovered. For example, an end user SLA specifies a minimum of four simultaneous data instance replicas and the instance replicator 166 identifies only two current operational instances. In such a situation, not only is the SLA out of compliance, but the data within a data instance may be at risk, due to the low level of redundancy. Such a condition, though exceedingly rare if it were to occur at all, would necessitate a very high level of urgency by priority manager 184 if workload 174 responsible for executing the data replication redundancy operations were to incur any backlog whatsoever. As before, priority manager 184 may address the resulting backlog using the generic backlog indicator 189 and the optional custom backlog indicator 187 associated with the corresponding workload 174 to prioritize and potentially scale the backlog indicator so as to expedite restoration of the insufficient data instance replicas on the storage systems 105, 115.

Another example is with respect to clean-up sessions for server message block (SMB) protocol sessions. The Server Message Block protocol or "SMB protocol" is a network file sharing protocol that allows applications of data platform 150 to read and write to files and to request services from server programs in a computer network. The SMB protocol can be used on top of its TCP/IP protocol or other network protocols. Similar to garbage collection of unneeded garbage 164 consuming storage resources across storage systems 105, 115, discarded, errant, and/or rogue SMB protocol sessions deplete available computational resources of data platform 150. This is the result of SMB protocol sessions being opened and remaining active, but no longer needed. SMB cleaner 160 may check for open sessions and initiate a workload 174 to execute SMB session removal operations. When SMB cleaner 160 discovers few or no errant SMB sessions, the SMB session removal operations will execute very quickly or not at all. However, when data platform 150 fails to complete periodically requested SMB session removal operations due to, by way of example, extended periods of high computational load, the SMB session removal operations will incur repeated backlog. Overtime, the result of such a backlog is that SMB session removal operations will take longer and longer periods of time to run through to completion, due to the total increase in the quantity of SMB sessions to be cleaned. Therefore, priority manager 184 may yet again address the resulting backlog using the generic backlog indicator 189 and the optional custom backlog indicator 187 associated with the corresponding workload 174 to prioritize SMB session removal operations across the storage systems 105, 115.

Maintenance operations 146 may correspond with algorithms which lack any knowledge about the quantity of work to be performed each time they are initiated. Such algorithms may identify work to be performed by scanning meta tables and databases configure the maintenance operations 146 workloads 174. For example, algorithms may scan various resources to identify how much garbage 164 is marked as available for removal from the storage systems 105, 115, how many SMB sessions require cleaning, how many storage nodes need to be cloned, and/or how many data instance replicas need to be created. However, when a configured workload 174 cannot be completed within a single run, then additional runs may be required to complete tasks left unfinished by a previously configured workload 174. Stated differently, remaining tasks left unfinished may flow indirectly into a new workload 174 when the algorithms are subsequently repeated and yet again, identify work to be performed by scanning meta tables and databases to configure workloads 174 to carry out the needed maintenance operations 146. In certain examples, workload 174 is performed across two operational phases. A first operational phase may identify and discover the work that needs to be done using the algorithms to identify work by scanning meta tables and databases to configure the maintenance operations 146 into workloads 174. The second operational phase may then execute the configured workload 174 to carry out the work configured into workload 174.

A deadline expiry or deadline expiration may be configured to terminate and/or cancel executing but unfinished workloads or workloads which failed to start (and thus never finished) within a configurable period of time. The deadline expiry may ensure that workloads do not perform work using outdated, stale, and/or bad information. Deadline expiry configuration may be advantageous due to data getting stale over time. The more dynamic data is within storage system 105, 115, the more likely such data is to become outdated within any given unit of time. In some examples, a configured workload may consume hours and sometimes days to complete. The freshness of workload 174 therefore deteriorates over time, ultimately becoming irrelevant. Workloads 174 that were relevant upon creation may be useless hours or days later. When data platform 150 lacks sufficient computational resources to both determine work to be performed (phase one operations) and perform the work (phase two operations) due to excessive backlogs, the workloads 174 may operate on bad information, and thus waste computational resources of data platform 150. Priority manager 154 may therefore address such backlogs resulting in stale workloads 174 through the use of the single weighted backlog indicator value calculated for workloads to execute via the data platform, by applying configurable weights to each of the generic backlog indicator and the custom backlog indicator for a respective workload.

In some examples, specialized flags may be set, such as "gflags" for prioritizing garbage collection tasks or other maintenance operations 146. For instance, for pipelines and workloads 174 exhibiting high metadata utilization, the gflags are applied to prioritize algorithms for metadata reduction, such as executing a SnapTreeDedup pipeline and increasing QoS weights for Snap Tree actions. However, in some cases, these aggressive settings can induce an increased latency impact to backup and replication workloads 174, and in this example, applying these settings may require having frequent monitoring of the cluster and detailed re-adjustments to appropriately tune the settings to minimize latency and avoid negative impact to backup and replication workloads executing via the data platform.

In accordance with various aspects of the techniques, data platform 150 as shown at FIG. 1A may perform smart job scheduling of pipelines via a scheduler 154 based on the use of both a custom backlog indicator 187 and a generic backlog indicator 189 associated with enqueued pipelines and workloads. Scheduler 154 may perform smart job scheduling of pipelines to address the balance between high metadata utilization and system responsiveness in support of low latency applications by programmatically auto-tuning data platform 150 algorithms and prioritizing scheduling based on the amount of backlog for a given workload 174. Further, scheduler 154 may be configurable to make smarter scheduling decisions not just for Garbage Collection but for any workloads 174 and data platform 150 executed algorithms by implementing generic scheduling logic that prevents starvation of other workloads 174 competing for limited compute resources of data platform 150.

In this instance, scheduler 154 may use policies 158 and values determined by priority manager 184 to assist with automating these processes and eliminating any need for manual intervention, while potentially achieving desired operational metrics for data platform 150.

The optimization of scheduler 154 may result in decreased garbage estimates and garbage estimates that decrease faster than processes resulting from activation of the Aggressive GC UI button. The prioritized scheduling of algorithms by scheduler 154 may be based on a stack ranking. Scheduler 154 may use an urgency value associated with each pipeline for prioritization. Scheduler 154 may prioritize scheduling algorithms based on its backlog of the algorithm. Scheduler 154 may trigger an alert if an algorithms associated workload 174 backlog continues increasing. Fairness of scheduling algorithms and workloads is configurable by detecting starvation and reprioritization. For instance, even in the presence of a large deletion backlog, other workload algorithms should still receive an allocation to run.

Scheduler 154 may refrain from running pipelines if the pipelines do not need to run, for instance, a Chunk-CloudSpiller operation which allocates excessive computational needs to an associated cloud tier need not run when there is no associated cloud tier. Auto-tuning scheduling of a workload priority is based on the backlog for a workload 174. Certain workloads are only scheduled for SystemHigh priority actions or actions having a priority which satisfies a threshold. Scheduler 154 may prevent starvation of critical workload algorithms in shard/slots scheduling. Scheduler 154 may give reserved slots to critical pipelines based on urgency (High, Critical) of pipelines. A separate pool of slots may be carved out and reserved by the scheduler for this dynamic consumption. Scheduler 154 may be configurable to permit critical pipelines to overshoot reserved slots by 10%. Scheduler 154 may limit the number of action emitting shards by decoupling the limit from the number of nodes. Scheduler 154 may recalibrate the number of scribe scanner shards based on configurable fixed data size limits.

Scheduler 154 may speedup MR phase execution. For instance, the scheduler may increase a parallel Scribe range scan based on Cluster Utilization and/or decrease admittance of new pipelines with increasing Cluster utilization. The scheduler need not enforce optimizations globally across multiple services, scope may be restricted to specific services, pods, clusters, clients and end users, clouds, etc. Scheduler 154 need not auto tune all expediting flags, such as gflags or other configurable flags. Scheduler 154 may improve pipeline deadline extensions by hanging the extension/shrinking based on quality or type of actions or may employ a staggered mode without any requirement to change backlog deadlines. Scheduler 154 may alter block IO weights or ignore them.

**Architecture** overview: Smart job scheduling of pipelines performs systematic and dynamic auto-tuning broadly in the following spaces:

1. Prioritizing job scheduling.
2. Prioritize shard scheduling.
3. Prioritize workload deployment actions.
4. Auto-tune workload deployment throttling settings.
5. Prioritize scribe range scans.
6. Prioritize disk IO.
7. Extending pipeline deadlines.

**Prioritize Job Scheduling:** The decision to re-prioritize jobs or change gflag settings may be based on a need. The need may be defined on the basis of a Backlog Indicator.

**Backlog Indicator:** The backlog indicator of a workload deployment algorithm may provide a degree of pending work having a value in the range of zero to one-hundred or range [0,100], and may be published regularly for every runnable workload which is executed by data platform 150. According to various implementations, the backlog indicator may fulfill the following requirements: 1. The backlog indicator value may represent the pending work of an algorithm for a workload 174, such as the estimated garbage (e.g., outdated data) in the system for the workload to clear. 2. The backlog indicator value may be comparable with other backlog indicators published by other algorithms for fairness to those other algorithms. 3. The value may be periodically updated to reflect current status of backlog and prevent starvation if the pipeline is not scheduled.

Optionally, the scheduler may operate on a data platform 150 for which the backlog indicator is not be implemented for all pipelines having schedulable workloads, and thus, the backlog indicator may be calculated as a composite value derived from two parts: Specifically, a Generic Backlog Indicator (GBI) 189 and a Custom Backlog Indicator (CBI) 187, with the composite score being identified as a final backlog indicator which is a weighted sum of both the generic and the custom backlog indicators 189 and 187, respectively.

The weighted sum final backlog indicator may be calculated as follows:

$$B = w_c . B_c + (1 - w) . B_g,$$

where term $B$ is the backlog indicator, $B_c$ is the custom backlog indicator, $B_g$ is the generic backlog indicator, and $w_c$ is the weight of the custom backlog indicator, with a configurable default of "0.4."

If a particular pipeline does not implement the custom backlog indicator, scheduler 154 may nevertheless still operate to schedule associated workloads and the custom backlog indicator will have a weight set to 0, such that $B = B_g$.

For comparability requirements of backlog indicators, the weights for custom backlog indicators are limited such that generic backlog indicators still provide a baseline for workload algorithms implementing custom backlog indicators.

**Generic Backlog Indicator:** To implement generic backlog indicators, generic parameters may be utilized that are applicable for all algorithms. For instance, the generic backlog indicators may be a weighted sum of at least the two following backlog indicators, including: (1) Run Interval Backlog Indicator, which is a backlog indicator for scheduling delay for an algorithm beyond its desired run interval; (2) Deadline Backlog Indicator, which is a backlog indicator for algorithms hitting a deadline in the last few runs.

The generic backlog indicator may be calculated as follows:

$$B_g = w_d . B_d + (1 - w_d) . B_r,$$

where the term $B_g$ is the generic backlog indicator, $B_d$ is the deadline backlog indicator, $B_r$ is the run interval backlog indicator and $w_d$ is the weight of the deadline backlog indicator with a configurable default of 0.25.

**Run Interval Backlog Indicator:** The Run Interval Backlog Indicator may represent a measure of how long or what period of time the algorithm for a workload 174 was not scheduled after the last run ended for the particular workload algorithm. If execution of the workload algorithm was not successfully scheduled and deployed for execution by the scheduler within its configured run interval, then it is considered backlogged. Thus, the longer the workload algorithm is not scheduled, scheduler 154 may increase the backlog indicator value, when calculated with the below formula:

$$B_r = max(min\left((T_{cur} - T_{last} - R) * \frac{100}{(M-1).R}, 100\right),0),$$

where the term $B_r$ is the run interval backlog indicator, $T_{cur}$ is the current timestamp, $T_{last}$ is the last run end timestamp or an uptime for a system where a run history is unavailable, the term "R" is the run interval of the pipeline having the workload and where the term "M" is the run interval multiplier at which the backlog is considered 100%.

In the above example formula, the term "M" represents a parameter which can influence how fast or slow, in relative terms of run interval of a pipeline, the algorithm for a workload accumulates backlog when the workload is not getting scheduled by the scheduler. Typically, it is preferable to accumulate at a slower rate for short run interval algorithms and faster rate for algorithms scheduled at longer run intervals.

Consider the following chart:

Table 1. Algorithm Run Interval Chart

| Algorithm | Run Interval | Multiplier | Max Backlog Interval |
|---|---|---|---|
| StatsAggregator | 3 minutes | 20 | 1 hours |
| ReplicationFixer | 15 minutes | 19 | 4.75 hours |
| GarbageCollector | 4 hours | 11 | 44 hours |
| MorphBricks | 12 hours | 2 | 2 days |
| GPSR | 2 days | 2 | 4 days |
| SnapTreeDedupe | 4 days | 2 | 8 days |

Thus, an exponentially decaying function is provided for the multiplier. One such decaying function can be expressed as follows:

$$f(t) = a.(1 - r)^t + b; where\ a >\ 0, b\ \geq 0, 0\ \leq r < 1.$$

By experimenting with different values for parameters, the values set forth by Table 2 are shown to yield a reasonably desired fit for the exponentially decaying function.

Table 2. Parameters:

| Parameters | Value |
|---|---|
| a | 18.00 |
| b | 2 |
| r | 0.00005 |

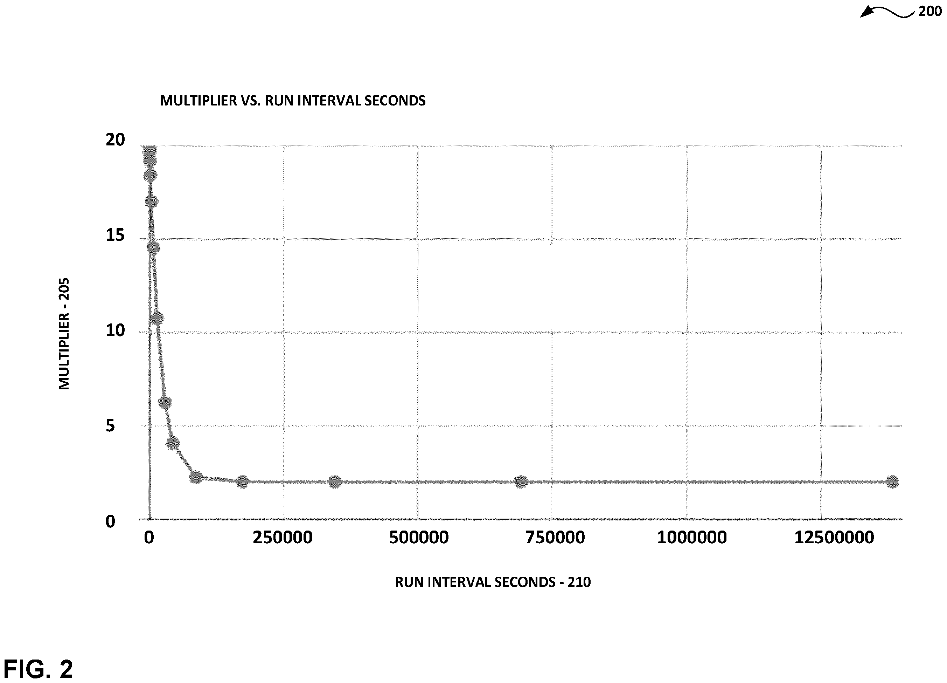

FIG. 2 is a graph diagram 200 illustrating the relationship between multiplier values and run interval seconds corresponding with the chart as set forth at Table 3 below. In the example of FIG. 2, the vertical axis represents multiplier values (205) and the horizontal axis represents run interval seconds (210).

Table 3. Run interval seconds vs. multiplier:

| Run interval seconds | Multiplier |
|---|---|
| 60 | 20 |
| 180 | 20 |
| 360 | 20 |
| 900 | 19 |
| 1800 | 18 |
| 3600 | 17 |
| 7200 | 15 |
| 14400 | 11 |
| 28800 | 6 |
| 43200 | 4 |
| 86400 | 2 |
| 172800 | 2 |
| 345600 | 2 |
| 691200 | 2 |
| 1382400 | 2 |

**Deadline Backlog Indicator:** The deadline backlog indicator measures the number of consecutive deadline hits in the last few runs of the pipeline with a configurable max lookback of five (5) runs. For instance, if the most recent run finished without a deadline, then there is no deadline backlog, even if prior runs hit the deadline. Generally, algorithms for workloads that are hitting deadlines could not have finished their work, and thus, the deadline backlog indicator is an indirect measure of pending work backlog as well.

The deadline backlog indicator may be calculated as follows:

$$B_d = D * 100/5,$$

where the term $B_d$ is the deadline backlog indicator, and the term "D" represents the number of consecutive deadlines.

**Custom Backlog Indicator:** It is expected that Generic Backlog Indicators alone are generally sufficient for most of the workload algorithms as the Generic Backlog Indicators provide some notion of pending work backlog as well as operate to sufficiently prevent starvation. However, in some cases, such as for garbage collection operations, a custom backlog indicator is implemented which provides configurability to provide an extra priority boost which is governed by actual pending work. Alternatively, the scheduler may consume, reference, or utilize other custom backlog indicators for different workload algorithms such as SnapTreeDedupe, ReplicationFixer, TierRebalancer,ChunkCloudSpiller, and so forth. For maintenance operation 146 workload algorithms which perform, among other tasks, garbage collection, a custom backlog indicator is configured to publish stats for its backlog indicator as well as raise alert if its backlog repeatedly is observed to be increasing across multiple samples. Thus, the same already published custom backload indicator may be re-used by scheduler 154 for the purposes of smart scheduling. At a high level, the custom backlog indicator may be configured as a composition of the following backlog indicators: 1. Chunk GC backlog and 2. Erasure Coding (EC) conversion backlog. Erasure Coding, or EC for short, implements a mathematical technique for storing a piece of data across N disks such that the potential loss or actual loss (e.g., inadvertent erasure) of a few of the disks still allows the data to be reconstructed from the remaining disks.

According to such implementations, a backlog indicator is computed with the weighted sum of a garbage collection (GC) Backlog Indicator and the EC Backlog Indicator then it is scaled down with current utilization % so as to result in a Scaled Backlog Indicator (SBI) 185. For example, if the cluster utilization is 40%, the custom backlog indicator is scaled down to 140/2=70%, at 80% utilization, 180/2=90% value, and so forth

In this example, the custom backlog indicator may be calculated as follows:

$$B_c = \left( w_{gc}.B_{gc} + \left( 1 - w_{gc} \right).B_{ec} \right).\frac{(1 + U)}{2},$$

where the term $B_c$ is the custom backlog indicator, $B_{gc}$ is the GC or garbage collection backlog indicator, $B_{ec}$ is the is the EC backlog indicator, $w_{gc}$ is the weight of the GC backlog indicator with a configurable default of 0.75, and "U" is the cluster utilization percentage (%).

**Urgency Scaling of Backlog Indicator:** Scheduler 154 may utilize an urgency value, as depicted at element 107. The urgency 107, shown at FIG. 1A and 1B as connected with priority manager 184, may be used to enforce stack ranking of algorithms where urgency value is statically determined for all pipelines. All critical pipelines should have higher urgency than any non-critical pipelines. Some algorithms may implement garbage collection and may auto-tune an associated urgency value based on cluster utilization. However, the use of dynamic urgency is not specific to garbage collection algorithms. Thus, scheduler 154 may utilize an urgency value to implement dynamic urgency based on the work backlog for that particular algorithm, pipeline, or workload, regardless of the work type. For example, scheduler 154 may implement dynamic urgency for other administrative tasks, overhead work performed on behalf of data platform 150, or end user specific work having been associated with a sufficient urgency 107 value by data platform 150 or by the administrators for data platform 150. Similarly, the urgency 107 value of an algorithm may be used by scheduler 154 for scheduling priorities of any running shards under the control or influence of the scheduler. In this example, an urgency value may additionally be utilized to prioritize job scheduling by making the urgency value part of the backlog indicator.

Alternatives for incorporating urgency 107 in job scheduling by scheduler 154 include: (1) Configuring priority manager 184 to add urgency to the Generic Backlog Indicator with some weighted value, with a configurable weight for urgency being permissible. Caution is warranted as too small of a weight may provide insufficient change whereas too large of a weight may diminish the impact of other backlog indicators; and (2) configuring scheduler 154 for using urgency to sort the job run set to enforce strict stack ranking. This approach may affect algorithms that are scheduled in decreasing order of backlog indicator value. In this example, use of strict stack ranking may provide unfair advantage to algorithms returning high urgency value but may not have sufficient backlog, and therefore, careful selection is warranted.

According to some example implementations, the urgency value of an algorithm being scheduled for execution by scheduler 154 may be selected to scale the overall backlog indicator with the following advantages: (1) scheduler 154 may schedule critical algorithms with an advantage as long as they have a backlog; and (2) scheduler 154 may schedule non-critical algorithms which may still be prioritized if their backlog increases, however the threshold will be higher for these algorithms to attain this priority over critical (higher urgency) algorithms.

A similar scaling scheme may be utilized for backlog indicator with respect to urgency as used for the garbage collection custom backlog indicator in the context of cluster utilization.

The Scaled Backlog Indicator (SBI) 185 may be calculated as follows:

$$B_s = B.(1 + U_c\ /\ U_{max})/2)$$

where the term $B_s$ is the scaled backlog indicator, where $U_c$ is the urgency of the workload algorithm, and where $U_{max}$ is the maximum urgency value.

So as to limit the impact of scaling, bounded values are defined for urgency, acting as a type of curb. For instance, the following levels are configurable and may be defined as defaults including: NotUrgent(0), Low (1), Medium (2), High(3), and Critical(4).

**Publishing Backlog Indicators:** According to certain implementations, backlog Indicators may be published periodically by priority manager 184 for all pipelines accessible to scheduler 154 by an alarm handler. The frequency of publishing is different for each pipeline and is a factor of its run interval, with a configurable default value of 4. For instance, for maintenance operations 146 (e.g., garbage collection, etc.), if the run interval is 4 hours, it will be published every hour. The backlog indicator may be additionally published upon occurrence of job finish as the last run would have a changed backlog, e.g., a reduced work backlog, and may have hit a deadline.

**Job Scheduling with Backlog Indicator:** The last published backlog indicator value output by priority manager 184 may be used by scheduler 154 to prioritize scheduling in the job run queue. The job run queue may be set with a custom comparator, which may be modified to first compare with the backlog indicator of the pipeline then by last start time, etc. In this example, if an algorithm has a backlog, it will not be skipped by scheduler 154, even if it has not yet reached its run interval. In this case, the generic backlog may not have a run interval backlog published by priority manager 184, but it can nevertheless have other types of backlog. Additionally, the custom backlog may be utilized by scheduler 154 to prioritize scheduling for the algorithm in question.

**Prioritize Shard Scheduling operations:** In various implementations of smart scheduling as implemented by scheduler 154, the backlog may be extended based on prioritization metrics provided by priority manager 184 for scheduling shards of a running workload algorithm. For instance, operations of scheduler 154 will schedule shards based on the backlog indicator of the algorithms published by priority manager 184. Operations may combine the backlog indicator with current run time of the algorithm to penalize long running algorithms. For shards that are runnable but waiting to be scheduled by scheduler 154, another indicator for wait time may be added by priority manager 184 to increase, and in effect, bump up the priority of the shard while waiting in the queue to be picked up by scheduler 154. With such operations, wait time indicators can be faster or slower for different algorithms. Start-time fair queueing (SFQ) may be utilized to keep runnable shards sorted in accordance with the above priority scheme. Some algorithms may additionally use reserved slots as noted above, and the scheduling logic of scheduler 154 may therefore be configured to honor those reservations.

**Prioritize Scheduler Actions:** Action priority for GC, Metadata GC and Chunk Cloud Spill Actions may be tuned automatically based on cluster storage utilization threshold (Metadata utilization for snap tree actions). However, scheduler 154 may be configured with the following optional parameters to realize further improvements to auto tuning action priority implemented by the scheduler: 1.) The threshold for high priority actions may be configured by default to 75% and critical priority actions are configured by default to 85%. However, configuring a lower threshold for high priority to 70% provides additional headroom between high and critical actions priority. 2.) For GC actions, the scheduler may be configured to emit high priority actions when the backlog indicator value satisfies or exceeds a configurable threshold.

Similar to the use of a backlog indicator, the quantification of quality or type of actions may be a normalized value between [0,100]. Certain implementations refer to the quantification of quality or type of actions as a "utility score" and may be treated similarly to maintenance operation 146 (e.g., garbage collection, etc.) workloads to sort actions. With such a configuration: 1.) Master can periodically inquire utility scores from running shards, possibly through QuerySlavesOp. 2.) A shard may calculate utility score as a moving average of internal utility scores for the current set of actions emitted. For instance, maintenance operation 146 workload sorts actions based on how much data will be garbage collected, how many sessions will be cleaned, how many data instances will be replicated, and/or how many storage nodes will be cloned. 3.) Utility score may also be adjusted with % of kCASErrors encountered. 4.) If the utility score drops down below certain thresholds, the job can be expired by the master, based on the deadline having been met. The utility score may be implemented based on deadline expiry only for specific maintenance operation 146 pipelines/workloads (such as garbage collection only), while other pipelines/workloads configured to utilize a generic or default implementation based on action_exec_time_min_pct will expire jobs after 50% of action execution when configured with defaults. Other jobs may be configured at any time to a customized parameter which deviates from the default.

**Implementation Alternatives:** 1.) In various examples, the configuration represents the priority of a workload, pipeline, or algorithm with a single number called Backlog Indicator which may be computed with multiple sub indicators; however, alternative implementations may output or expose the underlying sub indicators for further nuanced customization on an as-needed basis. 2.) In various examples, there is a provision for both a custom and a generic backlog indicator, in which the generic indicator provides the common base comparison and fairness among algorithms, while the custom indicator is customizable to accommodate special needs of a workload or pipeline and represents actual pending work within an algorithm of the workload or pipeline. 3.) In various examples, the configuration disables pipelines based on cluster utilization to simulate similar settings as Aggressive GC gflags. However, caution is warranted with this approach as it may indefinitely keep pipelines disabled if cluster utilization is never sufficiently reduced down below a threshold. without involvement of administrative support for the data platform, the scheduler may fail to address end user concerns with required adjustments to their environment if the underlying problem is 28izeng issue, stale snapshots taking space, or an incorrect retention policy, etc. 4.) Using only a custom backlog to prioritize algorithms and auto tune gflags is another implementation choice. However, such an approach may not provide sufficient fairness in job priority determination and can cause starvation of other pipelines. 5.) Extending/Shrinking the deadline of a pipeline based on quality or type of action is yet another implementation choice. However, doing so requires the collection of additional information from the running pipeline action emitting shards, which increases complexity and computational overhead on data platform 150. In some instances, with staggered runs of the pipelines, priority of this feature reduces as staggered run allows MR phase of the next pipeline run to be scheduled in parallel to action emission of previous run.

**Scheduler indicator detail:** There are two different implementations of backlog indicators within the Scheduler: 1.) the backlog indicator for throttling; and 2.) the backlog indicator for alerting.

**Backlog Indicator for Throttling:** This backlog indicator was implemented to avoid throttling down the scheduler if any pipeline has a backlog. The indicator may be a Boolean value indicating whether the pipeline is backlogged or not.

**Backlog Indicator for Alerting:** Master publishes backlog indicators for different pipelines. Master also generates alerts based on backlog indicators published for the pipeline. Processing looks for positive slopes in the backlog indicator graph. If the number of positive slopes is more than 70% in the total samples, then processing raises an alert identifying the backlogged algorithm. The backlog indicator value may be scaled based on the current cluster usage, for instance, the same backlog indicator value may be scaled up and down based on current cluster utilization.

**Consolidated Backlog Indicators:** Optionally, rather than maintaining two different implementations of Backlog Indicators as discussed above, processing may permissibly move them in one place and possibly consolidate them.

**Generic Backlog Indicator:** Scheduler 154 or priority manager 184 may implement a generic backlog indicator based on average run interval of the pipeline overshooting the configured run interval. Processing measures run intervals from start time of previous run to current timestamp, however, for large clusters where pipelines run for longer than run intervals, an alternative configuration may be chosen. Average run time may be calculated as the difference between the start time of current run and end time of previous run, which indicates the quiet time when the pipeline did not run. Such a configuration should avoid flagging pipeline as backlogged where pipeline run time exceeds a configured run interval value. For runs which hit the deadline, the average run time provides an indication of a pipeline hitting the backlog.

There are two ways in which hitting the deadline can contribute to backlog indicator, and implementations may choose either or both of them to indicate backlog. For a run that fails to be scheduled resulting in the run hitting the deadline, measuring the average run interval from the previous successful run, will cause the average run interval to show up as increased value, hence increasing backlog indicator value. Alternatively, or additionally, processing may add an explicitly weighted value for deadline expired runs into the backlog indicator value. Enhancing the generic indicator further to factor in the duration of the pipeline to avoid situations where a delay in short run interval pipeline should not cause the scheduler to up-throttle itself as it indicates a backlog. This may be configured by scaling the backlog indicator with respect to the pipeline run interval. To the weighted mix of backlog indicator value, another weighted boost may be applied to mission critical pipelines to cause the backlog indicator values of those mission critical pipelines to increase faster than non-mission critical pipelines. Yet another indicator configurable is the number of actions emitted or time spent in the action execution phase by a respective pipeline in successive runs. Such a metric, when the number is increasing, it is indicative of a backlog increasing as the pipeline in question is doing more work.

**Garbage collection Backlog Indicator:** For garbage collection specific workload implementations, scheduler 154 my measure the backlog as an increase in storage reduction ratio and may optionally be performed for garbage collection pipelines. Priority manager 184 may compute the difference in last storage reduction ratio with average reduction ratio as percentage value and may additionally map this backlog indicator value in range [0, 100]. The garbage collection implementation of backlog indicator computes the average weight of different types of indicators, such as Chunk GC Backlog and EC Backlog. By adding the new type of indicators to this weighted average, weights may be tuned using a gflag for each type of indicator. Coded sensors provide an estimate of the amount of garbage emitted by previous garbage collection runs as it is calculated via reachability analysis of all chunks present in the cluster.

There may be a challenge with composition of different types of indicators to weighted average, sometimes data for one or more indicators may not be readily available, e.g., GPSR pipelines may not have run between two runs of the garbage collection pipeline and workload. Those unavailable indicators may be excluded and then processing will distribute the weighted average among available indicators. However, this may create undesirable fluctuations in the result if the value of the composition varies depending on the presence or absence of an indicator, which can further result in raising spurious alerts for positive slopes in the backlog indicator.

To avoid such scenario, the following enhanced configuration may be utilized: Processing will publish the first backlog indicator value when all ingredient indicators data is available. In further calculations, when one of the ingredient indicators is missing, the historical value of the missing indicator may instead be utilized, by also publishing ingredient indicator values in stats along with the overall indicator. This processing may help administrators and developers with debugging which ingredient is causing the backlog in the event of performance anomalies.

**Smart Pipeline Scheduling:** In addition to current usages of above backlog indicators, the backlog indicator value can also be used as an input to the pipeline scheduler to prioritize pipelines based on their backlog indicator value. By default, the master job scheduler picks up the pipelines from a sorted job run set which keeps jobs in a sorted order of least recently run pipeline. This logic provides fairness to algorithms and avoids starvation. The job run comparator may be further enhanced to retrieve the backlog indicator value for a pipeline. Based on the retrieved value, the scheduler may then prioritize pipelines having a higher backlog indicator value. Scheduling based exclusively on backlog may starve other pipelines that have not been run for an extended period of time. However, for generic backlog indicators, the scheduler already considers how far the workload or pipeline in question is past due for the next periodic run of that workload or pipeline which will eventually provide a catchup for starving pipelines. Regardless, this logic requires nuanced tuning through multiple iterations to optimize the parameters.

In such a way, processing performed by data platform 150 enables operations including the obtaining by a data platform, a generic backlog indicator for a plurality of workloads to execute via the data platform and obtaining, via the data platform, a custom backlog indicator for at least a subset of the plurality of workloads to execute via the data platform. According to such an example, for each of the workloads which are enqueued for execution via the data platform, the data platform further applies weights to each of the generic backlog indicator and the custom backlog indicator for a corresponding workload to obtain a single weighted backlog indicator value. The scheduler of the data platform may then proceed to schedule workloads for execution on the data platform based on the single weighted backlog indicator value corresponding to each respective workload.

In another example, the data platform may further determine an urgency value for each respective workload and then scale the single weighted backlog indicator value based on the determined urgency value to obtain a scaled backlog indicator value for each respective workload. In this example, scheduling of workloads for execution on the data platform may be based on the scaled backlog indicator value for each respective workload.

In another example, the computing system may further apply a configurable multiplier to the single weighted backlog indicator value to determine a run interval for the generic backlog indicator within a configurable range. In such an example, the run interval represents how quickly or how slowly a corresponding workload accumulates backlog while remaining in an unscheduled state.

Still further, in another example, the generic backlog indicator may include a measure of time that an algorithm associated with the workload has not been scheduled after concluding a prior execution of the same workload.

In yet another example, the custom backlog indicator may include a measure of utilization for a specified one or more resources within the data platform affected by the execution of an algorithm associated with the workload.

In accordance with the above examples, data platform 150 may perform operations including obtaining, at data platform 150, a generic backlog indicator or "GBI" 189 for workloads 174 which are to execute via data platform 150. Still further, the data platform 1 50 may obtain a custom backlog indicator or "CBI" 187, for at least a subset of the workloads 174 which are to execute via data platform 150. A priority manager 184 of data platform 150 may perform operations for calculating a single weighted backlog indicator value for each of the workloads 174 to execute via the data platform based on the various polices 158 of scheduler 154. For instance, scheduler 154 may define policies 158 which cause priority manager 184 to apply configurable weights to each of the generic backlog indicator 189 and the custom backlog indicator 187 for a respective one of the workloads 174. Scheduler 154 may then responsively or based on the calculated generic backlog indicator 189 and custom backlog indicator 187 as determined by priority manager 184, proceed with scheduling the workloads 174 for execution on data platform 150 based on the single weighted backlog indicator value corresponding to each respective workload.

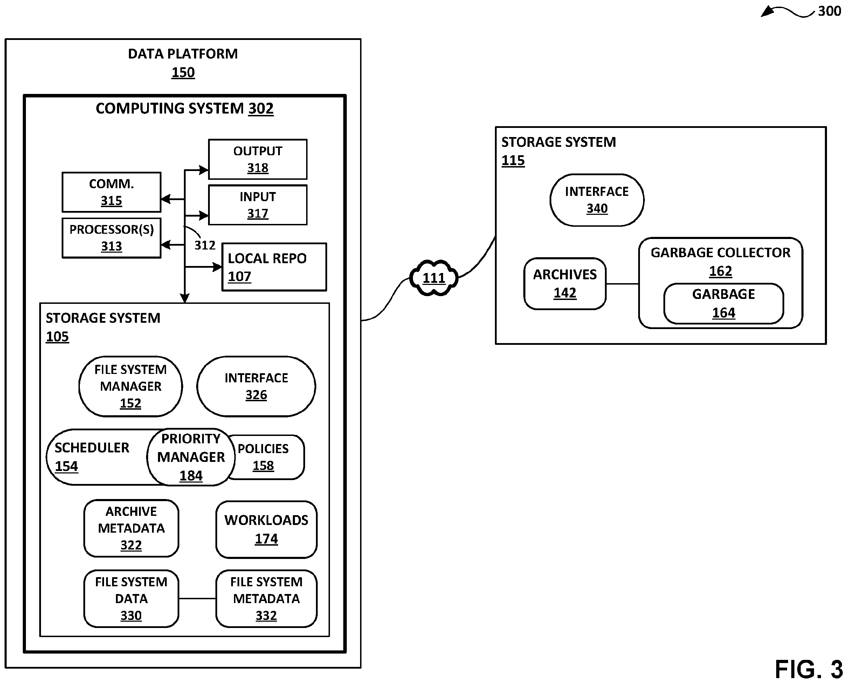

FIG. 3 is a block diagram illustrating example system 300, in accordance with techniques of this disclosure. System 300 of FIG. 3 may be described as an example or alternate implementation of system 100 of FIG. 1A or system 190 of FIG. 1B (where a scheduler 154 performs smart job scheduling of pipelines affecting a local archive storage system 115). One or more aspects of FIG. 3 may be described herein within the context of FIG. 1A and FIG. 1B.

In the example of FIG. 3, system 300 includes network 111, data platform 150 implemented by computing system 302, and storage system 115. In FIG. 3, network 111, data platform 150, and storage system 115 may correspond to network 111, data platform 150, and storage system 115 of FIG. 1A. Although only one archive storage system 115 is depicted, data platform 150 may apply techniques in accordance with this disclosure using multiple instances of archive storage system 115. The different instances of storage system 115 may be deployed by different cloud storage providers, the same cloud storage provider, by an enterprise, or by other entities.

Computing system 302 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 302 represents a cloud computing system, server farm, and/or server cluster (or portion thereof) that provides services to other devices or systems. In other examples, computing system 302 may represent or be implemented through one or more virtualized compute instances (e.g., virtual machines, containers) of a cloud computing system, server farm, data center, and/or server cluster.

In the example of FIG. 3, computing system 302 may include one or more communication units 315, one or more input devices 317, one or more output devices 318, and one or more storage devices of local storage system 105. Local storage system 105 includes interface module 326, file system manager 152, archive manager 154, policies 158, archive metadata 322, and chunk metadata 320. One or more of the devices, modules, storage areas, or other components of computing system 302 may be interconnected to enable inter-component communications (physically, communicatively, and/or operatively). In some examples, such connectivity may be provided through communication channels (e.g., communication channels 312), which may represent one or more of a system bus, a network connection, an inter-process communication data structure, or any other method for communicating data.

The computing system 302 comprises processing means. In the example of FIG. 3, the processing means comprises one or more processors 313 configured to implement functionality and/or execute instructions associated with computing system 302 or associated with one or more modules illustrated in FIG. 3 and described below. One or more processors 313 may be, may be part of, and/or may include processing circuitry that performs operations in accordance with one or more aspects of the present disclosure. Examples of processors 313 include microprocessors, application processors, display controllers, auxiliary processors, one or more sensor hubs, and any other hardware configured to function as a processor, a processing unit, or a processing device. Computing system 302 may use one or more processors 313 to perform operations in accordance with one or more aspects of the present disclosure using software, hardware, firmware, or a mixture of hardware, software, and firmware residing in and/or executing at computing system 302.

One or more communication units 315 of computing system 302 may communicate with devices external to computing system 302 by transmitting and/or receiving data, and may operate, in some respects, as both an input device and an output device. In some examples, communication units 315 may communicate with other devices over a network. In other examples, communication units 315 may send and/or receive radio signals on a radio network such as a cellular radio network. In other examples, communication units 315 of computing system 302 may transmit and/or receive satellite signals on a satellite network. Examples of communication units 315 include a network interface card (e.g., such as an Ethernet card), an optical transceiver, a radio frequency transceiver, a GPS receiver, or any other type of device that can send and/or receive information. Other examples of communication units 315 may include devices capable of communicating over Bluetooth®, GPS, NFC, ZigBee®, and cellular networks (e.g., 3G, 4G, 5G), and Wi-Fi® radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth®, NFC, or other technologies or protocols.

One or more input devices 317 may represent any input devices of computing system 302 not otherwise separately described herein. Input devices 317 may obtain, generate, receive, and/or process input. For example, one or more input devices 317 may generate or receive input from a network, a user input device, or any other type of device for detecting input from a human or machine.

One or more output devices 318 may represent any output devices of computing system 302 not otherwise separately described herein. Output devices 318 may generate, present, and/or process output. For example, one or more output devices 318 may generate, present, and/or process output in any form. Output devices 318 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of local storage system 105 within computing system 302 may store information for processing during operation of computing system 302, such as random-access memory (RAM), Flash memory, solid-state disks (SSDs), hard disk drives (HDDs), etc. Storage devices may store program instructions and/or data associated with one or more of the modules described in accordance with one or more aspects of this disclosure. One or more processors 313 and one or more storage devices may provide an operating environment or platform for such modules, which may be implemented as software, but may in some examples include any combination of hardware, firmware, and software. One or more processors 313 may execute instructions and one or more storage devices of storage system 105 may store instructions and/or data of one or more modules. The combination of processors 313 and local storage system 105 may retrieve, store, and/or execute the instructions and/or data of one or more applications, modules, or software. Processors 313 and/or storage devices of local storage system 105 may also be operably coupled to one or more other software and/or hardware components, including, but not limited to, one or more of the components of computing system 302 and/or one or more devices or systems illustrated as being connected to computing system 302.

File system manager 152 may perform functions relating to providing file system 153, as described above with respect to FIG. 1A. File system manager 152 may generate and manage file system metadata 332 for structuring file system data 330 for file system 153, and store file system metadata 332 and file system data 330 to local storage system 105. File system metadata 332 may include one or more trees that describe objects within file system 153 and the file system 153 hierarchy and can be used to write or retrieve objects within file system 153. File system metadata 332 may be referenced by scheduler 154 in support of performing smart job scheduling of pipelines, and vice-versa. File system manager 152 may interact with and/or operate in conjunction with one or more modules of computing system 302, including interface module 326 and scheduler 154.

Scheduler 154 may perform archive functions relating to scheduling workloads 174, tasks, algorithms, and pipelines, as described above with respect to FIG. 1A, including operations described above with respect to coordinating with priority manager 184. Scheduler 154 may reference, update, and manage archive metadata 322 for coordinating garbage collection algorithms and other operations affecting the storage system 115.

Interface module 326 may execute an interface by which other systems or devices may determine operations of file system manager 152 or archive manager 154. Another system or device may communicate via an interface of interface module 326 to specify one or more policies 158.

System 300 may be modified to implement an example of system 190 of FIG. 1B. In the modified system 300, workloads 174 may perform garbage collection routines on either the local archive storage system 115 or the archives 142.

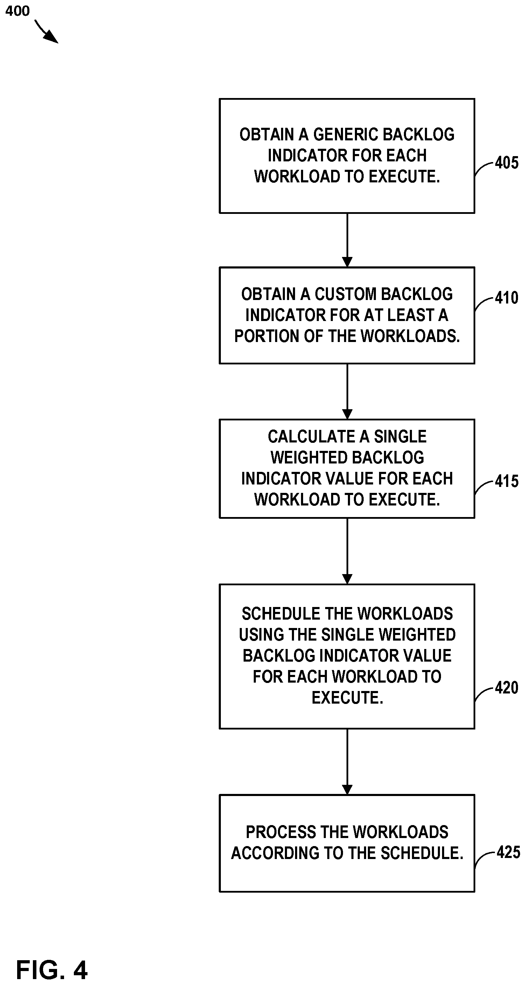

FIG. 4 is a flow chart illustrating an example mode of operation for a data platform 150 to perform smart job scheduling of workloads based on the use of both custom and generic backlog indicators associated with enqueued workloads, in accordance with techniques of this disclosure. The mode of operation is described with respect to system 100 of FIG. 1A, system 190 of FIG. 1B, and computing system 302 and storage system 105, 115 of FIG. 3.

Data platform 150 may obtain a generic backlog indicator for each workload to execute (405). For example, processing means (e.g. processing circuitry) of data platform 150 may obtain a generic backlog indicator for a plurality of workloads to execute via the data platform. In such an example, each of the plurality of workloads may specify one or more storage system maintenance operations for one or more storage systems managed by the data platform. Data platform 150 may obtain a custom backlog indicator for at least a portion of the workloads (410). For instance, processing means may obtain a custom backlog indicator for at least a subset of the plurality of workloads to execute via the data platform.

Data platform 150 may calculate a single weighted backlog indicator value for each workload to execute (415). For example, processing means of data platform 150 may calculate a single weighted backlog indicator value for each of the plurality of workloads to execute via the data platform. In such an example, the processing means may calculate each single weighted backlog indicator value by applying configurable weights to each of the generic backlog indicator and the custom backlog indicator for a respective workload from the plurality of workloads. Data platform 150 may schedule the workloads using the single weighted backlog indicator value for each workload to execute (420). For instance, processing means may schedule the plurality of workloads for execution on the data platform based on the single weighted backlog indicator value calculated for each of the plurality of workloads. Data platform 150 may process the workloads according to the schedule (425). For example, data platform 150 may process the workloads according to the schedule in decreasing order of the single weighted backlog indicator value.

In some examples, the one or more storage system maintenance operations include garbage removal operations that, responsive to determining the data platform has identified data as available for removal from the one or more storage systems managed by the data platform, remove the data from the one or more storage systems. In some examples, the one or more storage system maintenance operations include data replication redundancy operations that, responsive to determining a count of operational replicas of a data instance is below a configured redundancy minimum, replicate the data instance to create a new operational replica of the data instance. In some examples, the one or more storage system maintenance operations include storage node recovery operations that, responsive to determining a storage node failure within the one or more storage systems lowers the count of operational data instances below the configured redundancy minimum, clones the data instance into a new storage node. In some examples, the one or more storage system maintenance operations include server message block (SMB) session removal operations that, responsive to determining the data platform has identified one or more SMB sessions as available for removal from the one or more storage systems managed by the data platform, remove the one or more SMB sessions from the one or more storage systems.

Processing means may configure data platform 150 to perform further operations including, obtaining an urgency value for each of the plurality of workloads. Processing means may calculate a scaled backlog indicator value for each respective workload of the plurality of workloads by scaling the single weighted backlog indicator value corresponding to each respective workload of the plurality of workloads based on the urgency value obtained for the respective workload from the plurality of workloads. In such an example, processing means may schedule the plurality of workloads for execution using the scaled backlog indicator value for each respective workload of the plurality of workloads or processing means may schedule the plurality of workloads for execution using the scaled backlog indicator value for each respective workload of the plurality of workloads.

In some examples, obtaining the urgency value for each respective workload of the plurality of workloads includes configuring a first portion of the plurality of workloads as critical workloads; configuring a second portion of the plurality of workloads as non-critical workloads; and enforcing stack ranking of the plurality of workloads by requiring that every one of the critical workloads is configured with a higher urgency value than any urgency value associated with any one of the non-critical workloads.

In some instances, data platform 150 may apply a configurable multiplier to the single weighted backlog indicator value to determine a run interval for the generic backlog indicator within a configurable range. In some examples, the run interval represents how quickly or how slowly a corresponding workload accumulates backlog while remaining in an unscheduled state.

In some examples, the generic backlog indicator includes a measure of time each respective workload of the plurality of workloads remains in an unscheduled state after the respective workload from the plurality of workloads concludes a prior execution. In some examples, the custom backlog indicator includes a measure of utilization for a specified one or more resources within the data platform affected by the data platform executing the respective workload from the plurality of workloads.

In certain examples, each respective workload from the plurality of workloads embodies at least one of: an algorithm to be scheduled for execution via the data platform; a periodic algorithm to be scheduled for execution via the data platform using a repeating schedule; an iterative algorithm to be scheduled for execution via the data platform using a configurable frequency; processes specifying one or more executable tasks to be performed via the data platform; a job specifying the one or more executable tasks to be performed via the data platform; an overhead task specifying the one or more executable tasks to be performed via the data platform which is not uniquely associated with any end user of the data platform; an ad-hoc end user task specifying the one or more executable tasks to be performed via the data platform on behalf of, or at the request of, a uniquely specified end user of the data platform; an optimization routine specifying the one or more executable tasks to be performed via the data platform configured to improve operational efficiency of the data platform; and a garbage collection routine configured to increase available storage space to the data platform by, at least, removing data from one or more storage systems managed by the data platform which have been identified by the data platform as available for removal.

In at least one example, obtaining the generic backlog indicator for the plurality of workloads to execute via the data platform includes calculating the generic backlog indicator for each of the plurality of workloads based on one or more of: a configurable urgency value for each respective workload of the plurality of workloads; a backlog indicator value for each respective workload of the plurality of workloads representing a period of time the respective workload from the plurality of workloads has failed to initiate execution at the data platform beyond an initially scheduled execution time for the respective workload from the plurality of workloads; a quiet time value for each respective workload of the plurality of workloads representing a period of time the respective workload from the plurality of workloads was not executing between repeated executions of the respective workload from the plurality of workloads; a workload deadline value for each respective workload of the plurality of workloads indicating the respective workload from the plurality of workloads encountered a configurable deadline without finishing execution at the data platform; a workload deadline count for each respective workload of the plurality of workloads indicating a number of times the respective workload from the plurality of workloads encountered a configurable deadline without finishing execution at the data platform over a configurable historical time period or a historical quantity of execution attempts for the respective workload from the plurality of workloads; an actions emitted count for each respective workload of the plurality of workloads indicating a number of outputs from executable tasks executed to completion by the data platform as part of each respective workload of the plurality of workloads; an aggregate emissions time on a per-workload basis, calculated for each respective workload of the plurality of workloads to indicate a total amount of processing time required to fully complete one or more executable tasks performed by the data platform as part of the respective workload from the plurality of workloads. In some examples, data platform 150 may store the generic backlog indicator as calculated for each of the plurality of workloads in unique association with the respective workload from the plurality of workloads for which the generic backlog indicator was calculated.

In some examples, obtaining the custom backlog indicator for the plurality of workloads to execute via the data platform includes calculating the custom backlog indicator for at least a subset of the plurality of workloads based on one or more of: a workload-specific total utilization value for the respective workload from the plurality of workloads to be scheduled; a workload-specific total estimated garbage value for the respective workload from the plurality of workloads to be scheduled; a end user-activated user interface action or button indicating the data platform has received an input associated requesting application of aggressive garbage collection operations at the data platform; an end user-specific escalation request for the end user associated with the respective workload from the plurality of workloads to be scheduled; a service tier level corresponding to the end user which is associated with the respective workload from the plurality of workloads to be scheduled; a total quantity of pending workloads corresponding to the end user which is associated with the respective workload from the plurality of workloads to be scheduled; a cluster utilization value corresponding to a cluster utilized by the end user which is associated with the respective workload from the plurality of workloads to be scheduled; a published SLA for the respective workload from the plurality of workloads to be scheduled; and storing the custom backlog indicator as calculated for each of the plurality of workloads in unique association with the respective workload from the plurality of workloads for which the custom backlog indicator was calculated.

Although the techniques described in this disclosure are primarily described with respect to an archive function performed by an archive manager of a data platform, similar techniques may additionally or alternatively be applied for backup, replica, clone, and/or snapshot functions performed by the data platform. In such cases, archives 142 would be backups, replicas, clones, or snapshots, respectively.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth herein, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

Processing means, as used herein, may comprise processing circuitry as has been described above. In some examples, the processing means may comprise at least one processor and at least one memory with computer code comprising a set of instructions, which, when executed by the at least one processor, causes the at least one processor to perform any of the functions described herein. In some examples, the processing means may receive computer code comprising the set of instructions from at least one memory coupled to the processing means.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Aspects of the present invention are provided with reference to the following clauses:

Clause 1. A method comprising: obtaining, by processing circuitry of a data platform, a generic backlog indicator for a plurality of workloads to execute via the data platform, wherein each of the plurality of workloads specify one or more storage system maintenance operations for one or more storage systems managed by the data platform; obtaining, by the processing circuitry of the data platform, a custom backlog indicator for at least a subset of the plurality of workloads to execute via the data platform; calculating, by the processing circuitry using a priority manager, a single weighted backlog indicator value for each of the plurality of workloads to execute via the data platform, by applying configurable weights to each of the generic backlog indicator and the custom backlog indicator for a respective workload from the plurality of workloads; scheduling, by the processing circuitry using a scheduler, the plurality of workloads for execution on the data platform based on the single weighted backlog indicator value calculated for each of the plurality of workloads; and processing, by the processing circuitry of the data platform, the plurality of workloads according to the scheduling.

Clause 2. The method of clause 1, wherein the one or more storage system maintenance operations include at least one of: garbage removal operations that, responsive to determining the data platform has identified data as available for removal from the one or more storage systems managed by the data platform, remove the data from the one or more storage systems; data replication redundancy operations that, responsive to determining a count of operational replicas of a data instance is below a configured redundancy minimum, replicate the data instance to create a new operational replica of the data instance; storage node recovery operations that, responsive to determining a storage node failure within the one or more storage systems lowers the count of operational data instances below the configured redundancy minimum, clones the data instance into a new storage node; and server message block (SMB) session removal operations that, responsive to determining the data platform has identified one or more SMB sessions as available for removal from the one or more storage systems managed by the data platform, remove the one or more SMB sessions from the one or more storage systems.

Clause 3. The method of clause 1, further comprising: obtaining an urgency value for each of the plurality of workloads; calculating a scaled backlog indicator value for each respective workload of the plurality of workloads by scaling the single weighted backlog indicator value corresponding to each respective workload of the plurality of workloads based on the urgency value obtained for the respective workload from the plurality of workloads; and wherein scheduling the plurality of workloads for execution on the data platform based on the single weighted backlog indicator value corresponding to each respective workload of the plurality of workloads comprises one of: scheduling the plurality of workloads for execution in decreasing order according to the single weighted backlog indicator for each respective workload of the plurality of workloads, or scheduling the plurality of workloads for execution using the scaled backlog indicator value for each respective workload of the plurality of workloads.

Clause 4. The method of clause 3, wherein obtaining the urgency value for each respective workload of the plurality of workloads, comprises: configuring a first portion of the plurality of workloads as critical workloads; configuring a second portion of the plurality of workloads as non-critical workloads; and enforcing stack ranking of the plurality of workloads by requiring that every one of the critical workloads is configured with a higher urgency value than any urgency value associated with any one of the non-critical workloads.

Clause 5. The method of clause 1, further comprising: applying a configurable multiplier to the single weighted backlog indicator value to determine a run interval for the generic backlog indicator within a configurable range; and wherein the run interval represents how quickly or how slowly a corresponding workload accumulates backlog while remaining in an unscheduled state.

Clause 6. The method of clause 1, wherein the generic backlog indicator comprises a measure of time each respective workload of the plurality of workloads remains in an unscheduled state after the respective workload from the plurality of workloads concludes a prior execution.

Clause 7. The method of clause 1, wherein the custom backlog indicator comprises a measure of utilization for a specified one or more resources within the data platform affected by the data platform executing the respective workload from the plurality of workloads.

Clause 8. The method of clause 1, wherein each respective workload from the plurality of workloads embodies at least one of: an algorithm to be scheduled for execution via the data platform; a periodic algorithm to be scheduled for execution via the data platform using a repeating schedule; an iterative algorithm to be scheduled for execution via the data platform using a configurable frequency; processes specifying one or more executable tasks to be performed via the data platform; a job specifying the one or more executable tasks to be performed via the data platform; an overhead task specifying the one or more executable tasks to be performed via the data platform which is not uniquely associated with any customer of the data platform; an ad-hoc customer task specifying the one or more executable tasks to be performed via the data platform on behalf of, or at the request of, a uniquely specified customer of the data platform; an optimization routine specifying the one or more executable tasks to be performed via the data platform configured to improve operational efficiency of the data platform; and a garbage collection routine configured to increase available storage space to the data platform by, at least, removing data from one or more storage systems managed by the data platform which have been identified by the data platform as available for removal.

Clause 9. The method of clause 1, wherein obtaining the generic backlog indicator for the plurality of workloads to execute via the data platform, comprises: calculating the generic backlog indicator for each of the plurality of workloads based on one or more of: a configurable urgency value for each respective workload of the plurality of workloads; a backlog indicator value for each respective workload of the plurality of workloads representing a period of time the respective workload from the plurality of workloads has failed to initiate execution at the data platform beyond an initially scheduled execution time for the respective workload from the plurality of workloads; a quiet time value for each respective workload of the plurality of workloads representing a period of time the respective workload from the plurality of workloads was not executing between repeated executions of the respective workload from the plurality of workloads; a workload deadline value for each respective workload of the plurality of workloads indicating the respective workload from the plurality of workloads encountered a configurable deadline without finishing execution at the data platform; a workload deadline count for each respective workload of the plurality of workloads indicating a number of times the respective workload from the plurality of workloads encountered a configurable deadline without finishing execution at the data platform over a configurable historical time period or a historical quantity of execution attempts for the respective workload from the plurality of workloads; an actions emitted count for each respective workload of the plurality of workloads indicating a number of outputs from executable tasks executed to completion by the data platform as part of each respective workload of the plurality of workloads; an aggregate emissions time on a per-workload basis, calculated for each respective workload of the plurality of workloads to indicate a total amount of processing time required to fully complete one or more executable tasks performed by the data platform as part of the respective workload from the plurality of workloads; and storing the generic backlog indicator as calculated for each of the plurality of workloads in unique association with the respective workload from the plurality of workloads for which the generic backlog indicator was calculated.

Clause 10. The method of clause 1, wherein obtaining the custom backlog indicator for the plurality of workloads to execute via the data platform, comprises: calculating the custom backlog indicator for at least a subset of the plurality of workloads based on one or more of: a workload-specific total utilization value for the respective workload from the plurality of workloads to be scheduled; a workload-specific total estimated garbage value for the respective workload from the plurality of workloads to be scheduled; a customer-activated user interface action or button indicating the data platform has received an input associated requesting application of aggressive garbage collection operations at the data platform; a customer-specific escalation request for the customer associated with the respective workload from the plurality of workloads to be scheduled; a service tier level corresponding to the customer which is associated with the respective workload from the plurality of workloads to be scheduled; a total quantity of pending workloads corresponding to the customer which is associated with the respective workload from the plurality of workloads to be scheduled; a cluster utilization value corresponding to a cluster utilized by the customer which is associated with the respective workload from the plurality of workloads to be scheduled; a published SLA for the respective workload from the plurality of workloads to be scheduled; and storing the custom backlog indicator as calculated for each of the plurality of workloads in unique association with the respective workload from the plurality of workloads for which the custom backlog indicator was calculated.

Clause 11. A computing system comprising: a priority manager; a scheduler; a storage device; and processing circuitry having access to the storage device and configured to: obtain, by the processing circuitry, a generic backlog indicator for a plurality of workloads to execute via the data platform, wherein each of the plurality of workloads specify one or more storage system maintenance operations for one or more storage systems managed by the data platform; obtain, by the processing circuitry, a custom backlog indicator for at least a subset of the plurality of workloads to execute via the data platform; calculate, by the processing circuitry using the priority manager, a single weighted backlog indicator value for each of the plurality of workloads to execute via the data platform, by applying configurable weights to each of the generic backlog indicator and the custom backlog indicator for a respective workload from the plurality of workloads; schedule, by the processing circuitry using the scheduler, the plurality of workloads for execution on the data platform based on the single weighted backlog indicator value calculated for each of the plurality of workloads; and process, by the processing circuitry, the plurality of workloads according to the schedule.

Clause 12. The computing system of clause 11, wherein the one or more storage system maintenance operations include at least one of: garbage removal operations that, responsive to determining the data platform has identified data as available for removal from the one or more storage systems managed by the data platform, remove the data from the one or more storage systems; data replication redundancy operations that, responsive to determining a count of operational replicas of a data instance is below a configured redundancy minimum, replicate the data instance to create a new operational replica of the data instance; storage node recovery operations that, responsive to determining a storage node failure within the one or more storage systems lowers the count of operational data instances below the configured redundancy minimum, clones the data instance into a new storage node; and server message block (SMB) session removal operations that, responsive to determining the data platform has identified one or more SMB sessions as available for removal from the one or more storage systems managed by the data platform, remove the one or more SMB sessions from the one or more storage systems.

Clause 13. The computing system of clause 11, wherein the processing circuitry is further configured to: obtain an urgency value for each of the plurality of workloads; calculate a scaled backlog indicator value for each respective workload of the plurality of workloads by scaling the single weighted backlog indicator value corresponding to each respective workload of the plurality of workloads based on the urgency value obtained for the respective workload from the plurality of workloads; and wherein the computing system is to either: schedule the plurality of workloads for execution in decreasing order according to the single weighted backlog indicator for each respective workload of the plurality of workloads, or schedule the plurality of workloads for execution using the scaled backlog indicator value for each respective workload of the plurality of workloads.

Clause 14. The computing system of clause 13, wherein the computing system to obtain the urgency value for each respective workload of the plurality of workloads, comprises the computing system to: configure a first portion of the plurality of workloads as critical workloads; configure a second portion of the plurality of workloads as non-critical workloads; and enforce stack ranking of the plurality of workloads by requiring that every one of the critical workloads is configured with a higher urgency value than any urgency value associated with any one of the non-critical workloads.

Clause 15. The computing system of clause 11: wherein the computing system is to further apply a configurable multiplier to the single weighted backlog indicator value to determine a run interval for the generic backlog indicator within a configurable range; and wherein the run interval represents how quickly or how slowly a corresponding workload accumulates backlog while remaining in an unscheduled state.

Clause 16. The computing system of clause 11, wherein the generic backlog indicator comprises a measure of time each respective workload of the plurality of workloads remains in an unscheduled state after the respective workload from the plurality of workloads concludes a prior execution.

Clause 17. The computing system of clause 11, wherein the custom backlog indicator comprises a measure of utilization for a specified one or more resources within the computing system affected by the computing system executing the respective workload from the plurality of workloads.

Clause 18. A computer-readable storage medium comprising instructions that, when executed, configure processing circuitry of a computing system to: obtain a generic backlog indicator for a plurality of workloads to execute via the data platform, wherein each of the plurality of workloads specify one or more storage system maintenance operations for one or more storage systems managed by the data platform; obtain a custom backlog indicator for at least a subset of the plurality of workloads to execute via the data platform; calculate a single weighted backlog indicator value for each of the plurality of workloads to execute via the data platform, by applying configurable weights to each of the generic backlog indicator and the custom backlog indicator for a respective workload from the plurality of workloads; schedule the plurality of workloads for execution on the data platform based on the single weighted backlog indicator value calculated for each of the plurality of workloads; and process the plurality of workloads according to the schedule.

Clause 19. The computer-readable storage medium of clause 18, wherein the one or more storage system maintenance operations include at least one of: garbage removal operations that, responsive to determining the data platform has identified data as available for removal from the one or more storage systems managed by the data platform, remove the data from the one or more storage systems; data replication redundancy operations that, responsive to determining a count of operational replicas of a data instance is below a configured redundancy minimum, replicate the data instance to create a new operational replica of the data instance; storage node recovery operations that, responsive to determining a storage node failure within the one or more storage systems lowers the count of operational data instances below the configured redundancy minimum, clones the data instance into a new storage node; and server message block (SMB) session removal operations that, responsive to determining the data platform has identified one or more SMB sessions as available for removal from the one or more storage systems managed by the data platform, remove the one or more SMB sessions from the one or more storage systems.

Clause 20. The computer-readable storage medium of clause 18, wherein the instructions, when executed, further configure the processing circuitry of the computing system to: obtain an urgency value for each of the plurality of workloads; calculate a scaled backlog indicator value for each respective workload of the plurality of workloads by scaling the single weighted backlog indicator value corresponding to each respective workload of the plurality of workloads based on the urgency value obtained for the respective workload from the plurality of workloads; and wherein the instructions configure the processing circuitry of the computing system to either: schedule the plurality of workloads for execution in decreasing order according to the single weighted backlog indicator for each respective workload of the plurality of workloads, or schedule the plurality of workloads for execution using the scaled backlog indicator value for each respective workload of the plurality of workloads.

**Claims**

1.  A method comprising:

    obtaining, by processing means of a data platform, a generic backlog indicator for a plurality of workloads to execute via the data platform, wherein each of the plurality of workloads specify one or more storage system maintenance operations for one or more storage systems managed by the data platform;
    obtaining, by the processing means, a custom backlog indicator for at least a subset of the plurality of workloads to execute via the data platform;
    calculating, by the processing means, a single weighted backlog indicator value for each of the plurality of workloads to execute via the data platform, by applying configurable weights to each of the generic backlog indicator and the custom backlog indicator for a respective workload from the plurality of workloads;
    scheduling, by the processing means, the plurality of workloads for execution on the data platform based on the single weighted backlog indicator value calculated for each of the plurality of workloads; and
    processing, by the processing means, the plurality of workloads according to the scheduling.

2.  The method of claim 1, wherein the one or more storage system maintenance operations include at least one of:

    garbage removal operations that, responsive to determining the data platform has identified data as available for removal from the one or more storage systems managed by the data platform, remove the data from the one or more storage systems;
    data replication redundancy operations that, responsive to determining a count of operational replicas of a data instance is below a configured redundancy minimum, replicate the data instance to create a new operational replica of the data instance;
    storage node recovery operations that, responsive to determining a storage node failure within the one or more storage systems lowers the count of operational data instances below the configured redundancy minimum, clones the data instance into a new storage node; and
    server message block (SMB) session removal operations that, responsive to determining the data platform has identified one or more SMB sessions as available for removal from the one or more storage systems managed by the data platform, remove the one or more SMB sessions from the one or more storage systems.

3.  The method of claim 1 or claim 2, further comprising:

    obtaining an urgency value for each of the plurality of workloads;
    calculating a scaled backlog indicator value for each respective workload of the plurality of workloads by scaling the single weighted backlog indicator value corresponding to each respective workload of the plurality of workloads based on the urgency value obtained for the respective workload from the plurality of workloads; and wherein scheduling the plurality of workloads for execution on the data platform based on the single weighted backlog indicator value corresponding to each respective workload of the plurality of workloads comprises one of:

        scheduling the plurality of workloads for execution in decreasing order according to the single weighted backlog indicator for each respective workload of the plurality of workloads, or
        scheduling the plurality of workloads for execution using the scaled backlog indicator value for each respective workload of the plurality of workloads.

4.  The method of claim 3, wherein obtaining the urgency value for each respective workload of the plurality of workloads, comprises:

    configuring a first portion of the plurality of workloads as critical workloads;
    configuring a second portion of the plurality of workloads as non-critical workloads; and

enforcing stack ranking of the plurality of workloads by requiring that every one of the critical workloads is configured with a higher urgency value than any urgency value associated with any one of the non-critical workloads.

5. The method of any preceding claim, further comprising:

applying a configurable multiplier to the single weighted backlog indicator value to determine a run interval for the generic backlog indicator within a configurable range; and
wherein the run interval represents how quickly or how slowly a corresponding workload accumulates backlog while remaining in an unscheduled state.

6. The method of any preceding claim, wherein the generic backlog indicator comprises a measure of time each respective workload of the plurality of workloads remains in an unscheduled state after the respective workload from the plurality of workloads concludes a prior execution.

7. The method of any preceding claim, wherein the custom backlog indicator comprises a measure of utilization for a specified one or more resources within the data platform affected by the data platform executing the respective workload from the plurality of workloads.

8. The method of any preceding claim, wherein each respective workload from the plurality of workloads embodies at least one of:

an algorithm to be scheduled for execution via the data platform;
a periodic algorithm to be scheduled for execution via the data platform using a repeating schedule;
an iterative algorithm to be scheduled for execution via the data platform using a configurable frequency;
processes specifying one or more executable tasks to be performed via the data platform;
a job specifying the one or more executable tasks to be performed via the data platform;
an overhead task specifying the one or more executable tasks to be performed via the data platform which is not uniquely associated with any end user of the data platform;
an ad-hoc end user task specifying the one or more executable tasks to be performed via the data platform on behalf of, or at the request of, a uniquely specified end user of the data platform;
an optimization routine specifying the one or more executable tasks to be performed via the data platform configured to improve operational efficiency of the data platform; and
a garbage collection routine configured to increase available storage space to the data platform by, at least, removing data from one or more storage systems managed by the data platform which have been identified by the data platform as available for removal.

9. The method of any preceding claim, wherein obtaining the generic backlog indicator for the plurality of workloads to execute via the data platform, comprises:

calculating the generic backlog indicator for each of the plurality of workloads based on one or more of:

a configurable urgency value for each respective workload of the plurality of workloads;
a backlog indicator value for each respective workload of the plurality of workloads representing a period of time the respective workload from the plurality of workloads has failed to initiate execution at the data platform beyond an initially scheduled execution time for the respective workload from the plurality of workloads;
a quiet time value for each respective workload of the plurality of workloads representing a period of time the respective workload from the plurality of workloads was not executing between repeated executions of the respective workload from the plurality of workloads;
a workload deadline value for each respective workload of the plurality of workloads indicating the respective workload from the plurality of workloads encountered a configurable deadline without finishing execution at the data platform;
a workload deadline count for each respective workload of the plurality of workloads indicating a number of times the respective workload from the plurality of workloads encountered a configurable deadline without finishing execution at the data platform over a configurable historical time period or a historical quantity of execution attempts for the respective workload from the plurality of workloads;
an actions emitted count for each respective workload of the plurality of workloads indicating a number of outputs from executable tasks executed to completion by the data platform as part of each respective workload of the plurality of workloads;

an aggregate emissions time on a per-workload basis, calculated for each respective workload of the plurality of workloads to indicate a total amount of processing time required to fully complete one or more executable tasks performed by the data platform as part of the respective workload from the plurality of workloads; and

storing the generic backlog indicator as calculated for each of the plurality of workloads in unique association with the respective workload from the plurality of workloads for which the generic backlog indicator was calculated.

10. The method of any preceding claim, wherein obtaining the custom backlog indicator for the plurality of workloads to execute via the data platform, comprises:

calculating the custom backlog indicator for at least a subset of the plurality of workloads based on one or more of:

a workload-specific total utilization value for the respective workload from the plurality of workloads to be scheduled;

a workload-specific total estimated garbage value for the respective workload from the plurality of workloads to be scheduled;

a customer-activated user interface action or button indicating the data platform has received an input associated requesting application of aggressive garbage collection operations at the data platform;

a customer-specific escalation request for the end user associated with the respective workload from the plurality of workloads to be scheduled;

a service tier level corresponding to the end user which is associated with the respective workload from the plurality of workloads to be scheduled;

a total quantity of pending workloads corresponding to the end user which is associated with the respective workload from the plurality of workloads to be scheduled;

a cluster utilization value corresponding to a cluster utilized by the end user which is associated with the respective workload from the plurality of workloads to be scheduled;

a published SLA for the respective workload from the plurality of workloads to be scheduled; and

storing the custom backlog indicator as calculated for each of the plurality of workloads in unique association with the respective workload from the plurality of workloads for which the custom backlog indicator was calculated.

11. A computing system comprising:

a storage device; and

processing means, having access to the storage device, and configured to:

obtain a generic backlog indicator for a plurality of workloads to execute via the data platform, wherein each of the plurality of workloads specify one or more storage system maintenance operations for one or more storage systems managed by the data platform;

obtain a custom backlog indicator for at least a subset of the plurality of workloads to execute via the data platform;

calculate a single weighted backlog indicator value for each of the plurality of workloads to execute via the data platform, by applying configurable weights to each of the generic backlog indicator and the custom backlog indicator for a respective workload from the plurality of workloads;

schedule the plurality of workloads for execution on the data platform based on the single weighted backlog indicator value calculated for each of the plurality of workloads; and

process the plurality of workloads according to the schedule.

12. The computing system of claim 11, wherein the one or more storage system maintenance operations include at least one of:

garbage removal operations that, responsive to determining the data platform has identified data as available for removal from the one or more storage systems managed by the data platform, remove the data from the one or more storage systems;

data replication redundancy operations that, responsive to determining a count of operational replicas of a data instance is below a configured redundancy minimum, replicate the data instance to create a new operational replica of the data instance;

storage node recovery operations that, responsive to determining a storage node failure within the one or more storage systems lowers the count of operational data instances below the configured redundancy minimum, clones the data instance into a new storage node; and

server message block (SMB) session removal operations that, responsive to determining the data platform has identified one or more SMB sessions as available for removal from the one or more storage systems managed by the data platform, remove the one or more SMB sessions from the one or more storage systems.

13. The computing system of claim 11 or claim 12, wherein the processing means is further configured to:

obtain an urgency value for each of the plurality of workloads;
calculate a scaled backlog indicator value for each respective workload of the plurality of workloads by scaling the single weighted backlog indicator value corresponding to each respective workload of the plurality of workloads based on the urgency value obtained for the respective workload from the plurality of workloads; and
wherein the computing system is to either:

schedule the plurality of workloads for execution in decreasing order according to the single weighted backlog indicator for each respective workload of the plurality of workloads, or
schedule the plurality of workloads for execution using the scaled backlog indicator value for each respective workload of the plurality of workloads.

14. The computing system of any of claims 11 to 13:

wherein the processing means is further configured to apply a configurable multiplier to the single weighted backlog indicator value to determine a run interval for the generic backlog indicator within a configurable range; and
wherein the run interval represents how quickly or how slowly a corresponding workload accumulates backlog while remaining in an unscheduled state.

15. A computer-readable storage medium comprising instructions that, when executed, one or more processors to perform the method of any of claims 1 to 10.

FIG. 1A

FIG. 1B

FIG. 2

EP 4 513 338 A1

FIG. 3

400

OBTAIN A GENERIC BACKLOG
INDICATOR FOR EACH
WORKLOAD TO EXECUTE. ⌐405

OBTAIN A CUSTOM BACKLOG
INDICATOR FOR AT LEAST A
PORTION OF THE WORKLOADS. ⌐410

CALCULATE A SINGLE
WEIGHTED BACKLOG
INDICATOR VALUE FOR EACH
WORKLOAD TO EXECUTE. ⌐415

SCHEDULE THE WORKLOADS
USING THE SINGLE WEIGHTED
BACKLOG INDICATOR VALUE
FOR EACH WORKLOAD TO
EXECUTE. ⌐420

PROCESS THE WORKLOADS
ACCORDING TO THE SCHEDULE. ⌐425

# FIG. 4

Europäisches
Patentamt

European
Patent Office

Office européen
des brevets

# EUROPEAN SEARCH REPORT

**Application Number**

EP 24 17 9963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Cohesity Solution Guide: VMware", <br><br>, <br> 1 January 2017 (2017-01-01), XP093223696, <br> Retrieved from the Internet: <br> URL:https://manualzz.com/doc/37216157/cohesity-dataplatform--dataprotect-solution-guide?p=3#google_vignette <br> * page 3 - page 5 * | 1-15 | INV. <br> G06F11/14 |
| A | Anonymous: "Contrail Insights User Guide - first 400 pages", <br><br>, <br> 29 July 2021 (2021-07-29), XP093224039, <br> Retrieved from the Internet: <br> URL:https://manualzz.com/download/60189696 <br> * page 64 * | 1-15 | |
| A | Anonymous: "Amazon CloudWatch User Guide - first 400 pages", <br><br>, <br> 28 September 2022 (2022-09-28), XP093224045, <br> Retrieved from the Internet: <br> URL:https://web.archive.org/web/20220928184443if_/https://docs.aws.amazon.com/AmazonCloudWatch/latest/monitoring/acw-ug.pdf <br> * page 187 * | 1-15 | |
| A | Anonymous: "Alert priority", <br><br>, <br> 3 August 2023 (2023-08-03), XP093224049, <br> Retrieved from the Internet: <br> URL:https://www.servicenow.com/docs/bundle/vancouver-it-operations-management/page/product/event-management/concept/alert-priority.html <br> * the whole document * | 1-15 | |

**TECHNICAL FIELDS SEARCHED (IPC)**

G06F

-/--

The present search report has been drawn up for all claims

| Place of search | Date of completion of the search | Examiner |
|---|---|---|
| The Hague | 19 November 2024 | Dewyn, Torkild |

EPO FORM 1503 03.82 (P04C01)

Europäisches
Patentamt

European
Patent Office

Office européen
des brevets

# EUROPEAN SEARCH REPORT

Application Number

EP 24 17 9963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "AWS Backup Developer Guide - first 400 pages",<br><br>,<br>14 January 2023 (2023-01-14), XP093223686,<br>Retrieved from the Internet:<br>URL:https://web.archive.org/web/2023011420<br>4427if_/https://docs.aws.amazon.com/pdfs/a<br>ws-backup/latest/devguide/AWSBackup-dg.pdf<br>* the whole document *<br>- - - - - | 1-15 | |
| A | US 10 706 014 B1 (GUPTA ANUBHAV [US] ET AL) 7 July 2020 (2020-07-07)<br>* the whole document *<br>- - - - - | 1-15 | |
| | | | TECHNICAL FIELDS SEARCHED (IPC) |

The present search report has been drawn up for all claims

| Place of search | Date of completion of the search | Examiner |
|---|---|---|
| The Hague | 19 November 2024 | Dewyn, Torkild |

EPO FORM 1503 03.82 (P04C01)

## ANNEX TO THE EUROPEAN SEARCH REPORT
## ON EUROPEAN PATENT APPLICATION NO.

EP 24 17 9963

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | Publication date | Patent family member(s) | Publication date |
|---|---|---|---|
| US 10706014 B1 | 07-07-2020 | US 10706014 B1 | 07-07-2020 |
| | | US 2020265020 A1 | 20-08-2020 |
| | | US 2022179828 A1 | 09-06-2022 |

EPO FORM P0459

For more details about this annex : see Official Journal of the European Patent Office, No. 12/82